(19) **Europäisches Patentamt**
**European Patent Office**
**Office européen des brevets**

(11) **EP 3 109 282 A1**

(12) **EUROPEAN PATENT APPLICATION**
published in accordance with Art. 153(4) EPC

(43) Date of publication:
**28.12.2016 Bulletin 2016/52**

(21) Application number: **15751805.1**

(22) Date of filing: **19.02.2015**

(51) Int Cl.:
*C08L 77/00* (2006.01)     *C08K 3/00* (2006.01)
*C08K 3/24* (2006.01)      *C08K 3/32* (2006.01)
*C08K 5/05* (2006.01)      *C08K 5/09* (2006.01)
*C08K 5/42* (2006.01)      *C08K 9/04* (2006.01)

(86) International application number:
**PCT/JP2015/054665**

(87) International publication number:
**WO 2015/125886 (27.08.2015 Gazette 2015/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.02.2014 JP 2014032235**
**25.03.2014 JP 2014062739**

(71) Applicant: **ASAHI KASEI KABUSHIKI KAISHA Tokyo 101-8101 (JP)**

(72) Inventors:
• **KAWAMURA, Tomoyo**
  **Tokyo 101-8101 (JP)**
• **OKAMOTO, Masashi**
  **Tokyo 101-8101 (JP)**
• **SHIKANO, Yasukazu**
  **Tokyo 101-8101 (JP)**
• **WATANABE, Katsushi**
  **Tokyo 101-8101 (JP)**

(74) Representative: **D Young & Co LLP**
**120 Holborn**
**London EC1N 2DY (GB)**

(54) **POLYAMIDE RESIN COMPOSITION, PRODUCTION METHOD FOR POLYAMIDE RESIN COMPOSITION, AND MOLDED ARTICLE**

(57)     The present invention provides a polyamide resin composition comprising (A) a polyamide resin, (B) an aluminic acid metal salt, and (C) an organic acid, wherein the content of the aluminic acid metal salt (B) is larger than 0.6 parts by mass based on 100 parts by mass of the polyamide resin (A).

**Description**

Technical Field

The present invention relates to a polyamide resin composition, a method for producing a polyamide resin composition, and a molded product.

Background Art

Polyamide resins are excellent in strength, heat resistance, and chemical resistance and is excellent in specific gravity, i.e., has a smaller specific gravity than that of metals. Therefore, the polyamide resins have heretofore been used as alternative materials for metals in automobile mechanical parts, etc.
Particularly, members around engines are required to have durability in a high-temperature environment. Therefore, various polyamide resin compositions excellent in heat aging resistance have been proposed (see e.g., Patent Documents 1 and 2).
In the present specification, the "heat aging resistance" refers to resistance to so-called thermal oxidation, by which a molded product can maintain practically sufficient mechanical characteristics and has only a little color change when left for a long time in an air atmosphere under high-temperature conditions equal to or lower than the melting point with the shape of the molded product maintained.
In recent years, the downsizing of automobiles has been practiced as one approach for improvement in fuel efficiency. As a result, automobile engine room parts tend to have a higher density, and engine rooms tend to have a higher internal ambient temperature.
In addition, higher powers have been imparted to engines with superchargers for improvement in fuel efficiency. Along with this, engine rooms tend to have an increasingly higher ambient temperature.
Thus, there has been a demand for polyamide resins having heat aging resistance over a long period under higher-temperature conditions than ever. Specifically, there has been a growing demand for durable materials that can maintain practically sufficient mechanical characteristics and have only a little color change even when used for a long time in an air atmosphere under high-temperature conditions of 150°C to 230°C.
A technique which involves adding a copper compound (an oxide or a salt of copper) to a polyamide resin is known as a technique for improving the heat aging resistance of polyamide resins.
Likewise, a technique which involves mixing a copper compound and iron oxide with 2 types of polyamide resins differing in melting point (see e.g., Patent Document 3), a technique which involves mixing a trace element iron with a polyamide resin (see e.g., Patent Document 4), and a technique which involves mixing a fine dispersed metal powder with a polyamide resin (see e.g., Patent Document 5) are disclosed as techniques for improving the heat aging resistance.
Meanwhile, a technique relating to a polyamide resin composition supplemented with sodium aluminate and a method for producing the same is disclosed (see e.g., Patent Documents 6 to 16).
The polyamide resin composition supplemented with sodium aluminate has heretofore been known to have excellent heat retention stability.
The "heat retention stability" refers to characteristics by which the resin is less decomposed and deteriorated when the polyamide resin composition is kept at a temperature equal to or higher than the melting point and is thereby in a melted state, and consequently, reduction in mechanical physical properties or color change of the polyamide resin composition caused by the action of keeping it at the temperature equal to or higher than the melting point is prevented.
Aluminic acid metal salts have heretofore been known to be added to polyamide resins, mainly, for the purpose of, for example, preventing increase in yellowness and suppressing thermal decomposition.
Also, a technique which involves supplementing a polyamide resin with a resin having a lower melting point and a heat stabilizer is disclosed (see e.g., Patent Document 17).

Citation List

Patent Document

Patent Document 1: National Publication of International
Patent Application No. 2013-501095
Patent Document 2: National Publication of International
Patent Application No. 2013-521393

Patent Document 3: National Publication of International Patent Application No. 2008-527129
Patent Document 4: National Publication of International Patent Application No. 2006-528260
Patent Document 5: National Publication of International Patent Application No. 2008-527127
Patent Document 6: Japanese Patent Laid-Open No. 2005-206662
Patent Document 7: Japanese Patent Laid-Open No. 2004-91778
Patent Document 8: Japanese Patent Laid-Open No. S49-116151
Patent Document 9: Japanese Patent Laid-Open No. 2008-7563
Patent Document 10: Japanese Patent Laid-Open No. 2006-316244
Patent Document 11: Japanese Patent Laid-Open No. 2005-281616
Patent Document 12: Japanese Patent Laid-Open No. 2004-91778
Patent Document 13: Japanese Patent Laid-Open No. 2007-246580
Patent Document 14: Japanese Patent Laid-Open No. 2007-246581
Patent Document 15: Japanese Patent Laid-Open No. 2007-246583
Patent Document 16: Japanese Patent Laid-Open No. 2006-225593
Patent Document 17: National Publication of International Patent Application No. 2008-527129

Summary

Technical Problem

The techniques described in Patent Documents 1 to 17, however, have failed to yield a polyamide resin composition having a high level of heat aging resistance. Thus, there has been a demand for a polyamide resin composition that satisfies the requirements for heat aging resistance over a long period under high-temperature conditions as mentioned above.

For example, parts within automobile engine rooms might be exposed to water vapor in the air or flying of moisture-containing liquids such as LLC (long life coolant). Therefore, materials for such parts are required to have a high level of heat aging resistance and to be characteristically able to prevent reduction in their mechanical physical properties even during water absorption.

Thus, an object of the present invention is to provide, in light of the aforementioned problems of the conventional techniques, a polyamide resin composition that is excellent in heat aging resistance and also excellent in mechanical physical properties during water absorption, and a molded product thereof.

Solution to Problem

The present inventors have conducted diligent studies to attain the object and consequently have completed the present invention by finding that a polyamide resin composition containing a polyamide resin, an organic acid, and a predetermined amount of an aluminic acid metal salt has a high level of heat aging resistance, i.e., can effectively suppress oxidative degradation at the melting point or lower, and is also excellent in mechanical physical properties during water absorption.

Specifically, the present invention is as follows:

[1] A polyamide resin composition comprising

(A) a polyamide resin,
(B) an aluminic acid metal salt, and
(C) an organic acid, wherein

a content of the aluminic acid metal salt (B) is larger than 0.6 parts by mass based on 100 parts by mass of the polyamide resin (A).

[2] The polyamide resin composition according to [1], wherein having a number-average molecular weight (Mn) of 10,000 or higher.
[3] The polyamide resin composition according to [1] or [2], wherein the polyamide resin composition has a moisture content of 1000 ppm or lower and has a peak at 0 ppm to 70 ppm in solid 27A1-NMR measurement.
[4] The polyamide resin composition according to any one of [1] to [3], wherein a water obtained by being impregnated in 2 g of the polyamide resin composition into 50 mL of distilled water and left for 24 hours under a condition of 80°C has pH of 8 or lower.
[5] The polyamide resin composition according to any one of [1] to [4], wherein the content of the aluminic acid metal salt (B) is larger than 0.8 parts by mass based on 100 parts by mass of the polyamide resin (A).

[6] The polyamide resin composition according to any one of [1] to [5], wherein the content of the aluminic acid metal salt (B) is larger than 1.1 parts by mass based on 100 parts by mass of the polyamide resin (A).

[7] The polyamide resin composition according to any one of [1] to [6], wherein an alkalinity value of the aluminic acid metal salt (B) contained in 100 parts by mass of the polyamide resin (A) and an acid value of the organic acid (C) contained in 100 parts by mass of the polyamide resin (A) satisfy the following condition (formula 1) :

$$0 < X \leq 5 \ ... \ (formula \ 1)$$

(X = the alkalinity value of the aluminic acid metal salt
(B) contained in 100 parts by mass of the polyamide / the acid value of the organic acid (C) contained in 100 parts by mass of the polyamide).

[8] The polyamide resin composition according to any one of [1] to [7], wherein the alkalinity value of the aluminic acid metal salt (B) contained in 100 parts by mass of the polyamide resin (A) and a sum of the acid value of the organic acid (C) contained in 100 parts by mass of the polyamide resin (A) and an acid value of a carboxyl group terminus of the polyamide resin (A) satisfy the following condition (formula 2):

$$0 < Y \leq 3 \ ... \ (formula \ 2)$$

(Y = the alkalinity value of the aluminic acid metal salt
(B) contained in 100 parts by mass of the polyamide / (the acid value of the organic acid (C) contained in 100 parts by mass of the polyamide + the acid value of the carboxyl group terminus of the polyamide resin (A))).

[9] The polyamide resin composition according to any one of [1] to [8], wherein the organic acid (C) has a molecular weight (Mn) of $50 \leq Mn \leq 1000$.

[10] The polyamide resin composition according to any one of [1] to [9], wherein the organic acid (C) has a carboxyl group.

[11] The polyamide resin composition according to any one of [1] to [10], wherein the organic acid (C) is an aromatic carboxylic acid.

[12] The polyamide resin composition according to any one of [1] to [8], wherein having
a weight-average molecular weight/number-average molecular weight (Mw/Mn) of 2.0 or higher, and
Mw/Mn of 3.0 or higher after heat aging at 120°C for 1000 hours.

[13] The polyamide resin composition according to any one of [1] to [8] and [12], wherein in analysis based on a GPC-MALS-VISCO method,
a molecule having a molecular weight of 100,000 or higher has a branched structure with one or more branch points, and the molecule having a molecular weight of 100,000 or higher has a carboxylic anhydride functional group.

[14] The polyamide resin composition according to any one of [1] to [8], [12], and [13], wherein
the organic acid (C) comprises a carboxylic anhydride group-containing unsaturated vinyl monomer as a component constituting the backbone, and
the organic acid (C) has a glass transition temperature of 0°C < Tg.

[15] The polyamide resin composition according to [14], wherein the organic acid (C) is a copolymer of an olefin and maleic anhydride.

[16] The polyamide resin composition according to [14] or [15], wherein the organic acid (C) is a copolymer of ethylene and maleic anhydride.

[17] The polyamide resin composition according to any one of [1] to [16], wherein the aluminic acid metal salt (B) has been added to the polyamide resin (A) by melt kneading.

[18] The polyamide resin composition according to any one of [1] to [17], wherein the organic acid (C) has been added to the polyamide resin (A) by melt kneading.

[19] The polyamide resin composition according to any one of [1] to [18], wherein the aluminic acid metal salt (B) is sodium aluminate.

[20] The polyamide resin composition according to any one of [1] to [19], further comprising (D) an inorganic filler except for the aluminic acid metal salt.

[21] The polyamide resin composition according to [20], wherein the inorganic filler (D) except for the aluminic acid metal salt is glass fibers.

[22] The polyamide resin composition according to [20] or [21], wherein the inorganic filler (D) except for the aluminic acid metal salt is glass fibers and comprises a carboxylic anhydride group-containing unsaturated vinyl monomer as a portion of a component that is applied to the surface of the glass fibers.

[23] The polyamide resin composition according to any one of [1] to [22], wherein an amount of decrease in mass is 10% or less when the polyamide resin composition is left at 300°C for 1 hour in an inert gas atmosphere.

[24] A method for producing the polyamide resin composition according to any one of [1] to [23], comprising a step of adding an aluminic acid metal salt (B) to a polyamide resin (A) by melt kneading.

[25] The method for producing a polyamide resin composition according to [24], wherein the method comprises a step of adding an organic acid (C) to the polyamide resin (A) by melt kneading.

[26] The method for producing a polyamide resin composition according to [24] or [25], wherein the method comprises a step of adding the aluminic acid metal salt (B) in a masterbatch form.

[27] The method for producing the polyamide resin composition according to any one of [24] to [26], wherein the method comprises the step of adding the organic acid (C) in a masterbatch form.

[28] A molded product comprising a polyamide resin composition according to any one of [1] to [23].

[29] Use of a polyamide resin composition comprising (A) a polyamide resin, (B) an aluminic acid metal salt, and (C) an organic acid for producing a molded product excellent in heat aging resistance and physical properties during water absorption.

Advantageous Effects of Invention

The present invention can provide a polyamide resin composition excellent in heat aging resistance and also excellent in mechanical physical properties during water absorption, and a molded product thereof.

Description of Embodiments

Hereinafter, a mode for carrying out the present invention (hereinafter, simply referred to as the "present embodiment") will be described in detail.

The present embodiment described below is given merely for the purpose of illustrating the present invention and is not intended to limit the present invention by the contents described below. The present invention can be appropriately changed or modified without departing from the spirit thereof.

[Polyamide resin composition]

The polyamide resin composition of the present embodiment comprises

(A) a polyamide resin,
(B) an aluminic acid metal salt, and
(C) an organic acid, wherein
the content of the aluminic acid metal salt (B) is larger than 0.6 parts by mass based on 100 parts by mass of the polyamide resin (A).

The polyamide resin composition of the present embodiment having the aforementioned composition exert excellent heat aging resistance, and is also excellent in mechanical physical properties during water absorption.

Hereinafter, each constituent of the polyamide resin composition according to the present embodiment will be described in detail.

((A) Polyamide resin)

The polyamide resin composition of the present embodiment contains (A) a polyamide resin (hereinafter, also referred to as a "component (A)").

The "polyamide resin" is a polymer having amide bonds (-NHCO-) in the backbone.

Examples of the polyamide resin (A) include, but are not limited to, a polyamide resin obtained by the condensation polymerization of a diamine and a dicarboxylic acid, a polyamide resin obtained by the ring-opening polymerization of a lactam, a polyamide resin obtained by the self-condensation of an aminocarboxylic acid, and a copolymer obtained by the copolymerization of two or more types of monomers constituting these polyamide resins.

Only one of these polyamide resins may be used alone as the polyamide resin (A), or two or more thereof may be used in combination.

Hereinafter, the starting materials for the polyamide resin will be described.

<Diamine>

Examples of the diamine include, but are not limited to, aliphatic diamines, alicyclic diamines, and aromatic diamines.

Examples of the aliphatic diamines include, but are not limited to: linear saturated aliphatic diamines each having 2 to 20 carbon atoms such as ethylenediamine, propylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, and tridecamethylenediamine; and branched saturated aliphatic diamines each having 3 to 20 carbon atoms such as 2-methylpentamethylenediamine (also referred to as 2-methyl-1,5-diaminopentane), 2,2,4-trimethylhexamethylenediamine, 2,4,4-trimethylhexamethylenediamine, 2-methyloctamethylenediamine, and 2,4-dimethyloctamethylenediamine. Examples of the branched saturated aliphatic diamines include diamines having a substituent branched from the backbone.

Examples of the alicyclic diamines include, but are not limited to, 1,4-cyclohexanediamine, 1,3-cyclohexanediamine, and 1,3-cyclopentanediamine.

Examples of the aromatic diamines include, but are not limited to, m-xylylenediamine, p-xylylenediamine, m-phenylenediamine, o-phenylenediamine, and p-phenylenediamine.


<Dicarboxylic acid>

Examples of the dicarboxylic acid include, but are not limited to, aliphatic dicarboxylic acids, alicyclic dicarboxylic acids, and aromatic dicarboxylic acids.

Examples of the aliphatic dicarboxylic acids include, but are not limited to, linear or branched saturated aliphatic dicarboxylic acids each having 3 to 20 carbon atoms such as malonic acid, dimethylmalonic acid, succinic acid, 2,2-dimethylsuccinic acid, 2,3-dimethylglutaric acid, 2,2-diethylsuccinic acid, 2,3-diethylglutaric acid, glutaric acid, 2,2-dimethylglutaric acid, adipic acid, 2-methyladipic acid, trimethyladipic acid, pimelic acid, suberic acid, azelaic acid, sebacic acid, dodecanedioic acid, tetradecanedioic acid, hexadecanedioic acid, octadecanedioic acid, eicosanedioic acid, and diglycolic acid.

Examples of the alicyclic dicarboxylic acids include, but are not limited to, alicyclic dicarboxylic acids such as 1,4-cyclohexanedicarboxylic acid, 1,3-cyclohexanedicarboxylic acid, and 1,3-cyclopentanedicarboxylic acid.

The number of carbon atoms in the alicyclic structure of each alicyclic carboxylic acid is not particularly limited and is preferably 3 to 10, more preferably 5 to 10, from the viewpoint of the balance between the water absorbability and the degree of crystallinity of the resulting polyamide resin.

The alicyclic dicarboxylic acid may be unsubstituted or may have a substituent.

Examples of the substituent include, but are not limited to, alkyl groups each having 1 to 4 carbon atoms such as a methyl group, an ethyl group, a n-propyl group, an isopropyl group, a n-butyl group, an isobutyl group, and a tert-butyl group.

Examples of the aromatic dicarboxylic acids include, but are not limited to, aromatic dicarboxylic acids each having 8 to 20 carbon atoms unsubstituted or substituted by a substituent.

Examples of the substituent include, but are not limited to, alkyl groups each having 1 to 6 carbon atoms, aryl groups each having 6 to 12 carbon atoms, arylalkyl groups each having 7 to 20 carbon atoms, halogen groups such as a chloro group and a bromo group, alkylsilyl groups each having 3 to 10 carbon atoms, sulfonic acid groups, and groups which are salts (e.g., sodium salt) thereof.

Examples of the aromatic dicarboxylic acids include, but are not limited to, terephthalic acid, isophthalic acid, naphthalenedicarboxylic acid, 2-chloroterephthalic acid, 2-methylterephthalic acid, 5-methylisophthalic acid, and 5-sodium sulfoisophthalic acid.

The dicarboxylic acids may further include trivalent or higher polyvalent carboxylic acids such as trimellitic acid, trimesic acid, and pyromellitic acid without impairing the object of the present embodiment.

Only one of these diamines or dicarboxylic acids may be used alone, or two or more thereof may be used in combination.


<Lactam>

Examples of the lactam include, but are not limited to, butyrolactam, pivalolactam, ε-caprolactam, caprylolactam, enantholactam, undecanolactam, and laurolactam (dodecanolactam).

Among them, ε-caprolactam, laurolactam, or the like is preferred, and ε-caprolactam is more preferred, from the viewpoint of tenacity.

<Aminocarboxylic acid>

Examples of the aminocarboxylic acid include, but are not limited to, compounds obtained by the ring-opening of the aforementioned lactam (ω-aminocarboxylic acid, α,ω-aminocarboxylic acid, etc.).

The aminocarboxylic acid is preferably a linear or branched saturated aliphatic carboxylic acid having 4 to 14 carbon atoms substituted at the ω position by an amino group from the viewpoint of enhancing the degree of crystallinity of the polyamide resin. Examples thereof include, but are not limited to, 6-aminocaproic acid, 11-aminoundecanoic acid, and 12-aminododecanoic acid. Another example of the aminocarboxylic acid includes p-aminomethylbenzoic acid.

Examples of the aforementioned polyamide resin (A) include, but are not limited to, polyamide resins such as polyamide 4 (poly-α-pyrrolidone), polyamide 6 (polycaproamide), polyamide 11 (polyundecanamide), polyamide 12 (polydodecanamide), polyamide 46 (polytetramethylene adipamide), polyamide 56 (polypentamethylene adipamide), polyamide 66 (polyhexamethylene adipamide), polyamide 610 (polyhexamethylene sebacamide), polyamide 612 (polyhexamethylene dodecamide), polyamide 116 (polyundecamethylene adipamide), polyamide TMHT (trimethylhexamethylene terephthalamide), polyamide 6T (polyhexamethylene terephthalamide), polyamide 2Me-5T (poly-2-methylpentamethylene terephthalamide), polyamide 9T (polynonamethylene terephthalamide), 2Me-8T (poly-2-methyloctamethylene terephthalamide), polyamide 6I (polyhexamethylene isophthalamide), polyamide 6C (polyhexamethylene cyclohexane dicarboxamide), polyamide 2Me-5C (poly-2-methylpentamethylene cyclohexane dicarboxamide), polyamide 9C (polynonamethylene cyclohexane dicarboxamide), 2Me-8C (poly-2-methyloctamethylene cyclohexane dicarboxamide), polyamide PACM12 (polybis(4-aminocyclohexyl)methane dodecamide), polyamide dimethyl PACM12 (polybis(3-methyl-aminocyclohexyl)methane dodecamide, polyamide MXD6 (poly-m-xylylene adipamide), polyamide 10T (polydecamethylene terephthalamide), polyamide 11T (polyundecamethylene terephthalamide), polyamide 12T (polydodecamethylene terephthalamide), polyamide 10C (polydecamethylene cyclohexane dicarboxamide), polyamide 11C (polyundecamethylene cyclohexane dicarboxamide), and polyamide 12C (polydodecamethylene cyclohexane dicarboxamide).

The symbol "Me" represents a methyl group.

The polyamide resin (A) in the polyamide resin composition of the present embodiment is preferably polyamide 46 (polytetramethylene adipamide), polyamide 66 (polyhexamethylene adipamide), polyamide 610, polyamide 612, polyamide 6T (polyhexamethylene terephthalamide), polyamide 9T (polynonanmethylene terephthalamide), polyamide 6I (polyhexamethylene isophthalamide), or polyamide MXD6 (poly-m-xylylene adipamide), or copolymerized polyamide containing these polyamide resins as constituents.

Particularly, the polyamide resin (A) is preferably polyamide 66 from the viewpoint of improvement in heat aging resistance.

The melting point of the polyamide resin (A) used in the polyamide resin composition of the present embodiment is not particularly limited and is preferably 200°C or higher, more preferably 210°C or higher, further preferably 240°C or higher.

The melting point of the polyamide resin (A) is set to a value equal to or higher than the lower limit described above, whereby the polyamide resin composition of the present embodiment tends to have improved heat resistance.

The melting point of the polyamide resin (A) according to the present embodiment is not particularly limited and is preferably 340°C or lower.

The melting point of the polyamide resin (A) is set to a value equal to or lower than the upper limit described above, whereby the thermal decomposition or degradation of the polyamide resin composition of the present embodiment during melt processing tends to be able to be effectively suppressed.

The melting point of the polyamide resin (A) can be measured according to JIS-K7121. For example, Diamond DSC manufactured by PerkinElmer Inc. can be used as a measurement apparatus. Specifically, the melting point of the polyamide resin (A) can be measured by a method described in Examples mentioned later.

The polyamide resin (A) used in the polyamide resin composition of the present embodiment is preferably contained at 33% by mass or more and 95% by mass or less, more preferably 50% by mass or more and 75% by mass or less, in the polyamide resin composition.

The polyamide resin composition of the present embodiment containing the polyamide resin (A) in the aforementioned range tends to be excellent in strength, heat resistance, chemical resistance, specific gravity, etc.

The relative viscosity in sulfuric acid of the polyamide resin (A) used in the polyamide resin composition of the present embodiment is preferably 1.8 or more and 3.0 or less, more preferably 2.2 or more and 2.8 or less.

The relative viscosity in sulfuric acid of the polyamide resin (A) is 1.8 or more, whereby the resulting polyamide resin composition tends to have better mechanical physical properties. Also, the relative viscosity in sulfuric acid of the polyamide resin (A) is 3.0 or less, whereby the resulting polyamide resin composition tends to have better flowability and appearance.

The relative viscosity in sulfuric acid can be controlled by the adjustment of a polymerization pressure for the polyamide resin (A).

The relative viscosity in sulfuric acid can be measured by a method that abides by JIS K 6920. Specifically, the relative viscosity in sulfuric acid can be measured by a method for measuring "Relative viscosity in 98% sulfuric acid ($\eta r$)" described in Examples mentioned later.

In the present embodiment, an end-capping agent for molecular weight adjustment can be further added during the polymerization of the monomers of the polyamide resin (A). This end-capping agent is not particularly limited, and any of those known in the art can be used.

Examples of the end-capping agent include, but are not limited to, monocarboxylic acids, monoamines, acid anhydrides such as phthalic anhydride, monoisocyanates, monoacid halides, monoesters, and monoalcohols.

Among them, a monocarboxylic acid or a monoamine is preferred from the viewpoint of the heat stability of the polyamide resin (A).

Only one of these end-capping agents may be used alone, or two or more thereof may be used in combination.

The monocarboxylic acids that can be used as the end-capping agent can be any monocarboxylic acid having reactivity with an amino group. Examples thereof include, but are not limited to: aliphatic monocarboxylic acids such as formic acid, acetic acid, propionic acid, butyric acid, valeric acid, caproic acid, caprylic acid, lauric acid, tridecylic acid, myristic acid, palmitic acid, stearic acid, pivalic acid, and isobutyric acid; alicyclic monocarboxylic acids such as cyclohexanecarboxylic acid; and aromatic monocarboxylic acids such as benzoic acid, toluic acid, $\alpha$-naphthalenecarboxylic acid, $\beta$-naphthalenecarboxylic acid, methylnaphthalenecarboxylic acid, and phenylacetic acid.

Only one of these monocarboxylic acids may be used alone, or two or more thereof may be used in combination.

The monoamines that can be used as the end-capping agent can be any monoamine having reactivity with a carboxyl group. Examples thereof include, but are not limited to: aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; and aromatic monoamines such as aniline, toluidine, diphenylamine, and naphthylamine.

Only one of these monoamines may be used alone, or two or more thereof may be used in combination.

Examples of the acid anhydrides that can be used as the end-capping agent include, but are not limited to, phthalic anhydride, maleic anhydride, benzoic anhydride, acetic anhydride, and hexahydrophthalic anhydride.

Only one of these acid anhydrides may be used alone, or two or more thereof may be used in combination.

Examples of the monoisocyanates that can be used as the end-capping agent include, but are not limited to, phenyl isocyanate, tolyl isocyanate, dimethylphenyl isocyanate, cyclohexyl isocyanate, butyl isocyanate, and naphthyl isocyanate.

Only one of these monoisocyanates may be used alone, or two or more thereof may be used in combination.

Examples of the monoacid halides that can be used as the end-capping agent include, but are not limited to, halogen-substituted monocarboxylic acids of monocarboxylic acids such as benzoic acid, diphenylmethanecarboxylic acid, diphenylsulfonecarboxylic acid, diphenyl sulfoxide carboxylic acid, diphenyl sulfide carboxylic acid, diphenyl ether carboxylic acid, benzophenonecarboxylic acid, biphenylcarboxylic acid, $\alpha$-naphthalenecarboxylic acid, $\beta$-naphthalenecarboxylic acid, and anthracenecarboxylic acid.

Only one of these monoacid halides may be used alone, or two or more thereof may be used in combination.

Examples of the monoesters that can be used as the end-capping agent include, but are not limited to, glycerin monopalmitate, glycerin monostearate, glycerin monobehenate, glycerin monomontanate, pentaerythritol monopalmitate, pentaerythritol monostearate, pentaerythritol monobehenate, pentaerythritol monomontanate, sorbitan monopalmitate, sorbitan monostearate, sorbitan monobehenate, sorbitan monomontanate, sorbitan dimontanate, sorbitan trimontanate, sorbitol monopalmitate, sorbitol monostearate, sorbitol monobehenate, sorbitol tribehenate, sorbitol monomontanate, and sorbitol dimontanate.

Only one of these monoesters may be used alone, or two or more thereof may be used in combination.

Examples of the monoalcohols that can be used as the end-capping agent include, but are not limited to, propanol, butanol, pentanol, hexanol, heptanol, octanol, nonanol, decanol, undecanol, dodecanol, tridecanol, tetradecanol, pentadecanol, hexadecanol, heptadecanol, octadecanol, nonadecanol, eicosanol, docosanol, tricosanol, tetracosanol, hexacosanol, heptacosanol, octacosanol, and triacontanol (all of which include linear and branched alcohols), oleyl alcohol, behenyl alcohol, phenol, cresol (o-, m-, and p-forms), biphenol (o-, m-, and p-forms), 1-naphthol, and 2-naphthol.

Only one of these monoalcohols may be used alone, or two or more thereof may be used in combination.

((B) Aluminic acid metal salt)

The polyamide resin composition of the present embodiment contains (B) an aluminic acid metal salt (hereinafter, also referred to as a "component (B)").

Examples of the aluminic acid metal salt (B) include, but are not limited to, lithium aluminate, sodium aluminate, potassium aluminate, beryllium aluminate, magnesium aluminate, and calcium aluminate. Only one of these aluminic acid metal salts may be used alone as the aluminic acid metal salt (B), or two or more thereof may be used in combination.

The aluminic acid metal salt (B) is preferably an aluminic acid alkali metal salt, more preferably sodium aluminate, from the viewpoint of improving heat aging resistance.

The polyamide resin composition of the present embodiment contains larger than 0.6 parts by mass of the aluminic acid metal salt (B) based on 100 parts by mass of the polyamide resin (A) which are thermoplastic resin components from the viewpoint of obtaining favorable heat aging resistance and initial strength.

The polyamide resin composition of the present embodiment preferably contains 0.8 parts by mass or more and 20 parts by mass or less, more preferably contains 0.8 parts by mass or more and 5 parts by mass or less, and further preferably contains 1.1 parts by mass or more and 5 parts by mass or less of the aluminic acid metal salt (B), based on 100 parts by mass of the polyamide resin (A).

In the polyamide resin composition of the present embodiment, the content of aluminic acid metal salt particles having a particle size of 1 $\mu$m or larger in the aluminic acid metal salt (B) is preferably 20% by mass or less, more preferably 15% by mass or less, further preferably 10% by mass or less, still further preferably 5% by mass or less.

The content of aluminic acid metal salt particles having a particle size of 1 $\mu$m or larger is 20% by mass or less in the component (B), whereby the polyamide resin composition of the present embodiment produces excellent heat aging resistance.

In this context, the particle size of the aluminic acid metal salt is a particle size of an aluminic acid metal salt present in the polyamide resin composition of the present embodiment.

The particle size of the aluminic acid metal salt in the polyamide resin composition can be measured, for example, by dissolving the polyamide resin composition in formic acid and measuring the particle size using a laser diffraction particle size distribution apparatus.

For controlling the content of aluminic acid metal salt particles having a particle size of 1 $\mu$m or larger in the aluminic acid metal salt (B) to 20% by mass or less as described above, it is effective to mix the aluminic acid metal salt (B) with the polyamide resin (A) in a state having a small amount of moisture.

Examples of such a method include a method which involves melt-kneading the aluminic acid metal salt (B) with the polyamide resin (A) using an extruder.

On the other hand, if the aluminic acid metal salt (B) is involved in the condensation polymerization step for the polyamide resin (A), the particle size of the aluminic acid metal salt (B) might be increased. Specifically, it is preferred to isolate the polyamide resin (A) after the completion of the polymerization step for the polyamide resin (A), and mix the component (A) with the component (B) at the stage of melt-kneading, which is the step of producing the polyamide resin composition.

The aluminic acid metal salt (B) may be added to the polyamide resin (A) at any time of polymerization and melt kneading processes.

The addition during melt kneading is preferred from the viewpoint of the dispersibility of the aluminic acid metal salt (B) and from the viewpoint of controlling the content of the aluminic acid metal salt particles having a particle size of 1 $\mu$m or larger to 20% by mass or less as described above.

((C) Organic acid)

The polyamide resin composition of the present embodiment contains (C) an organic acid (hereinafter, also referred to as a component (C)).

Examples of the organic acid as the component (C) include, but are not limited to, compounds having a carboxyl group, a sulfo group, a hydroxy group, a thiol group, or an enol group.

Only one of these organic acids may be used alone, or two or more thereof may be used in combination.

<Compound having carboxyl group>

Examples of the compound having a carboxyl group as the organic acid (C) include, but are not limited to, acetic acid, propanoic acid, butanoic acid, pentanoic acid, hexanoic acid, heptanoic acid, octanoic acid, nonanoic acid, decanoic acid, dodecanoic acid, tetradecanoic acid, hexadecanoic acid, heptadecanoic acid, octadecanoic acid, benzoic acid, oxalic acid, cyclohexanedicarboxylic acid, isophthalic acid, terephthalic acid, 1,2,4-benzenetricarboxylic acid, adipic acid, dodecanedioic acid, citric acid, tartaric acid, ethylenediaminetetraacetic acid, ethylenediaminetetraacetic acid disodium salt, and gluconic acid.

Only one of these compounds may be used alone, or two or more thereof may be used in combination.

Among the compounds having a carboxyl group listed above, a compound having a plurality of carboxyl groups in one molecule is preferred, such as cyclohexanedicarboxylic acid, isophthalic acid, terephthalic acid, 1,2,4-benzenetricarboxylic acid, adipic acid, dodecanedioic acid, citric acid, tartaric acid, ethylenediaminetetraacetic acid, or ethylenediaminetetraacetic acid disodium salt.

In the case of using the compound having a carboxyl group, the obtained polyamide resin composition has better physical properties during water absorption.

<Compound having sulfo group>

Examples of the compound having a sulfo group as the organic acid (C) include, but are not limited to, methanesulfonic acid, benzenesulfonic acid, p-toluenesulfonic acid, fluorosulfonic acid, and their derivatives.
Only one of these compounds may be used alone, or two or more thereof may be used in combination.

<Compound having hydroxy group>

Examples of the compound having a hydroxy group as the organic acid (C) include, but are not limited to, cyclohexanol, decanol, decanediol, dodecanol, dodecanediol, pentaerythritol, dipentaerythritol, tripentaerythritol, di-trimethylolpropane, D-mannitol, D-sorbitol, xylitol, phenol, and their derivatives.
Only one of these compounds may be used alone, or two or more thereof may be used in combination.
In the polyamide resin composition of the present embodiment, the organic acid (C) is preferably a compound having a carboxyl group from the viewpoint of physical properties during water absorption and productivity.
In the polyamide resin composition of the present embodiment, the organic acid (C) is preferably an aromatic carboxylic acid compound from the viewpoint of productivity.
Examples thereof include, but are not limited to, isophthalic acid, terephthalic acid, and 1,2,4-benzenetricarboxylic acid.
In the polyamide resin composition of the present embodiment, the molecular weight (Mn) of the organic acid (C) is preferably $50 \leq Mn \leq 1000$ from the viewpoint of physical properties during water absorption and productivity.
The molecular weight (Mn) of the organic acid (C) is more preferably $100 \leq Mn \leq 700$, further preferably $100 \leq Mn \leq 500$.
The organic acid (C) preferably comprises a carboxylic anhydride group-containing unsaturated vinyl monomer as a component constituting the backbone and has a glass transition temperature Tg exceeding 0°C, from the viewpoint of physical properties at high temperatures.
When the component (C) comprises a carboxylic anhydride group-containing unsaturated vinyl monomer as a component constituting the backbone, its glass transition temperature is preferably 60°C < Tg.
The component (C) having a glass transition temperature of 60°C < Tg is more effective for improving the high-temperature physical properties of the polyamide resin composition of the present embodiment. The glass transition temperature is more preferably 60°C < Tg < 200°C from a similar viewpoint.
The Tg of the component (C) can be measured according to JIS-K7121 at a rate of temperature increase of 20°C/min using Diamond-DSC manufactured by PerkinElmer, Inc.
When the organic acid (C) comprises a carboxylic anhydride group-containing unsaturated vinyl monomer as a component constituting the backbone, the glass transition temperature Tg needs only to exceed 0°C. The organic acid (C) is particularly preferably a copolymer of an olefin and maleic anhydride.
Examples of the organic acid (C) include, but are not limited to, an ethylene-maleic anhydride copolymer, a propylene-maleic anhydride copolymer, a butadiene-maleic anhydride copolymer, a styrene-maleic anhydride copolymer, and an acrylonitrile-maleic anhydride copolymer.
Among them, an ethylene-maleic anhydride copolymer is preferred from the viewpoint of improvement in high-temperature physical properties.
When the organic acid (C) comprises a carboxylic anhydride group-containing unsaturated vinyl monomer as a component constituting the backbone, its weight-average molecular weight is preferably 600,000 or lower, more preferably 10,000 or higher and 600,000 or lower, further preferably 10,000 or higher and 400,000 or lower.
When the organic acid (C) comprises a carboxylic anhydride group-containing unsaturated vinyl monomer as a component constituting the backbone and has a weight-average molecular weight of 10,000 or higher, the resulting organic acid (C) has improved heat stability and can suppress decomposition or the like in the step of extruding the polyamide resin composition of the present embodiment.
The organic acid (C) having a weight-average molecular weight of 600,000 or lower tends to produce favorable dispersibility in the polyamide resin composition and improve the vibration fatigue resistance of the polyamide resin composition.
The organic acid (C) having a weight-average molecular weight of 400,000 or lower tends to be able to form a polyamide resin composition having better vibration fatigue resistance.
In the present specification, the weight-average molecular weight can be determined by gel permeation chromatography (GPC).
When the organic acid (C) comprises a carboxylic anhydride group-containing unsaturated vinyl monomer as a component constituting the backbone, its acid value is preferably 0.1 or higher, more preferably 0.2 or higher.

When the organic acid (C) comprises a carboxylic anhydride group-containing unsaturated vinyl monomer as a component constituting the backbone, the acid value is preferably 0.5 or lower.

The organic acid (C) having an acid value of 0.1 or higher and 0.5 or lower tends to be much more effective for improving vibration fatigue resistance.

In the present specification, the acid value of the organic acid (C) can be determined according to JIS K0070 by measuring the amount (mg) of potassium hydroxide necessary for neutralizing acids per g of the organic acid (C).

In the polyamide resin composition of the present embodiment, the ratio (X) of the alkalinity value of the aluminic acid metal salt (B) contained in 100 parts by mass of the polyamide resin (A) to the acid value of the organic acid (C) contained in 100 parts by mass of the polyamide resin (A) preferably satisfies the following condition (formula 1):

$$0 < X \leq 5 \quad ... \quad (\text{formula 1})$$

$$(X = \text{Alkalinity value of the aluminic acid metal salt (B)}$$
$$\text{contained in 100 parts by mass of the polyamide resin (A)}$$
$$/ \text{ Acid value of the organic acid (C) contained in 100}$$
$$\text{parts by mass of the polyamide resin (A))}$$

from the viewpoint of physical properties during water absorption and productivity.

In the polyamide resin composition of the present embodiment, the ratio (X) is more preferably $0 < X \leq 3$, further preferably $0 < X \leq 2$, still further preferably $0 < X \leq 1$ in the condition (formula 1).

The acid value of the organic acid (C) contained in 100 parts by mass of the polyamide resin (A) is defined on the basis of JISK0070.

In other words, the acid value is the amount (mg) of potassium hydroxide necessary for neutralizing free fatty acids, resin acids, and the like contained in 1 g of a sample.

The alkalinity value of the aluminic acid metal salt (B) contained in 100 parts by mass of the polyamide resin (A) is defined on the basis of JISK0070.

In other words, the alkalinity value is the amount (mg) of potassium hydroxide necessary for neutralizing hydroxy group-bound acetic acid when 1 g of a sample is acetylated.

In the polyamide resin composition of the present embodiment, the ratio (Y) of the alkalinity value of the aluminic acid metal salt (B) contained in 100 parts by mass of the polyamide resin (A) to the sum of the acid value of the organic acid (C) contained in 100 parts by mass of the polyamide resin (A) and the acid value of the carboxyl group terminus of the polyamide resin (A) preferably satisfies the following condition (formula 2):

$$0 < Y \leq 3 \quad ... \quad (\text{formula 2})$$

$$(Y = \text{Alkalinity value of the aluminic acid metal salt (B)}$$
$$\text{contained in 100 parts by mass of the polyamide resin (A)}$$
$$/ \text{ (Acid value of the organic acid (C) contained in 100}$$
$$\text{parts by mass of the polyamide resin (A) + Acid value of}$$
$$\text{the carboxyl group terminus of the polyamide resin (A)))}$$

from the viewpoint of physical properties during water absorption and productivity.

In the polyamide resin composition of the present embodiment, the ratio (Y) is more preferably $0 < Y \leq 2$, further preferably $0 < Y \leq 1.5$, still further preferably $0 < Y \leq 1.2$, in the condition (formula 2).

The relation of the organic acid (C) to the carboxylic acid or the end-capping agent in the component (A) will be supplemented.

The carboxylic acid used as the starting material monomer or the end-capping agent in the polyamide resin (A) is incorporated in the polymer for its purpose. Specifically, the carboxylic acid is covalently bonded in the polymer chain.

On the other hand, in the present specification, an organic acid component having a carboxylic acid functional group that is not covalently bonded to the polymer for its purpose is defined as the organic acid (C).

When the carboxylic acid used as the starting material monomer or the end-capping agent in the polyamide resin (A) is the same component as the carboxylic acid used as the organic acid (C), the carboxylic acid used as the starting material monomer or the end-capping agent in the polyamide resin (A) refers to a carboxylic acid covalently bonded in the polymer chain while the carboxylic acid used as the organic acid (C) refers to a carboxylic acid that is not covalently bonded to the polymer.

In the case of using a carboxylic acid as the starting material monomer or the end-capping agent in the polyamide resin (A), those skilled in the art generally recognize that this carboxylic acid is covalently bonded in the polymer chain.

A carboxylic acid may be contained at a content equal to or higher than the very small amount as impurities in a polyamide resin in a state where the carboxylic acid is not covalently bonded in the polymer chain. This is an intentional operation, and those skilled in the art generally recognize that composition and a production method need to be devised for this purpose.

Specifically, even if a carboxylic acid is used as a starting material in a usual polyamide resin composition, it cannot be said that the carboxylic acid as the organic acid (C) intended by the present invention is unintentionally contained therein.

The above description relates to an organic acid that may be used as the carboxylic acid or the end-capping agent in the component (A), specifically, an organic acid having 1 to 3 carboxylic acid functional groups in one molecule.

On the other hand, an organic acid molecule having 4 or more carboxylic acid functional groups in one molecule exerts the effects of the present invention even if a portion of the carboxylic acid functional groups is covalently bonded to the polyamide resin.

In other words, the organic acid having 1 to 3 carboxylic acid functional groups in one molecule cannot sufficiently exert the effects of the present invention if a portion of the carboxylic acid functional groups is covalently bonded to the polyamide resin. By contrast, the organic acid having 4 or more carboxylic acid functional groups in one molecule exerts the effects of the present invention even if a portion of the carboxylic acid functional groups is covalently bonded to the polyamide resin.

The present inventors assume that this is because, even if a portion of the 4 or more carboxylic acid functional group present in one molecule is covalently bonded to the polyamide, the remaining non-covalently-bonded carboxylic acid functional group(s) exerts the effects of the present invention.

The covalent bond between the organic acid and the polymer of the polyamide resin as mentioned above can be confirmed by use of, for example, Soxhlet extraction, nuclear magnetic resonance (NMR), or IR, though the approach is not limited thereto.

The organic acid (C) may be added to the polyamide resin (A) at any time of polymerization and melt kneading processes.

The addition during melt kneading is preferred from the viewpoint of productivity and improvement in physical properties during water absorption.

((D) Inorganic filler except for aluminic acid metal salt)

The polyamide resin composition of the present embodiment preferably contains (D) an inorganic filler except for an aluminic acid metal salt (hereinafter, also referred to as an inorganic filler (D) or a component (D)).

The content of the component (D) is preferably 10 parts by mass or more and 250 parts by mass or less, more preferably 10 parts by mass or more and 150 parts by mass or less, further preferably 15 parts by mass or more and 100 parts by mass or less, based on 100 parts by mass of the thermoplastic resin components (the component (A)).

Within the aforementioned range, the polyamide resin composition of the present embodiment tends to have better flowability and appearance characteristics.

Examples of the inorganic filler (D) except for an aluminic acid metal salt include, but are not limited to, glass fibers, carbon fibers, calcium silicate fibers, potassium titanate fibers, aluminum borate fibers, glass flakes, talc, kaolin, mica, hydrotalcite, calcium carbonate, zinc carbonate, zinc oxide, calcium monohydrogen phosphate, wollastonite, silica, zeolite, alumina, boehmite, aluminum hydroxide, titanium oxide, silicon oxide, magnesium oxide, calcium silicate, sodium aluminosilicate, magnesium silicate, ketjen black, acetylene black, farness black, carbon nanotubes, graphite, yellow copper, copper, silver, aluminum, nickel, iron, calcium fluoride, mica isinglass, montmorillonite, swellable fluorine mica, and apatite.

Among them, glass fibers having a circular or non-circular cross section, glass flakes, talc (magnesium silicate), mica, kaolin, wollastonite, titanium oxide, calcium phosphate, calcium carbonate, or calcium fluoride is preferred from the viewpoint of enhancing the strength and rigidity of the polyamide resin composition of the present embodiment.

Glass fibers, wollastonite, talc, mica, or kaolin is more preferred.

Glass fibers is further preferred.

One or more of these inorganic fillers may be used alone as the component (D), or two or more thereof may be used in combination.

The glass fibers or the carbon fibers further preferably have a number-average fiber diameter of 3 to 30 $\mu$m, a weight-average fiber length of 100 to 750 $\mu$m, and a weight-average fiber length/number-average fiber diameter aspect ratio (a value obtained by dividing the weight-average fiber length by the number-average fiber diameter) of 10 to 100 from the viewpoint that excellent mechanical characteristics can be imparted to the polyamide resin composition.

The wollastonite preferably has a number-average fiber diameter of 3 to 30 $\mu$m, a weight-average fiber length of 10 to 500 $\mu$m, and a weight-average fiber length/number-average fiber diameter aspect ratio of 3 to 100 from the viewpoint that excellent mechanical characteristics can be imparted to the polyamide resin composition of the present embodiment.

The talc, the mica, or the kaolin preferably has a number-average fiber diameter of 0.1 to 3 $\mu$m from the viewpoint that excellent mechanical characteristics can be imparted to the polyamide resin composition of the present embodiment.

In this context, the number-average fiber diameter and the weight-average fiber length described in the present specification can be determined as follow.

Specifically, the polyamide resin composition is placed in an electric furnace, and the organic matter contained therein is incinerated. For example, 100 or more filaments of the inorganic filler (D) are arbitrarily selected from the residue and observed by SEM. Their fiber diameters are measured, and an average value can be calculated to determine the number-average fiber diameter.

Also, the fiber lengths are measured using a SEM photograph taken at a magnification of $\times$1000, and the weight-average fiber length can be determined according to a predetermined expression (Weight-average fiber length $= \sum(I = 1 \rightarrow n)$ (Fiber length of the nth fiber)$^2$ / $\sum(I = 1 \rightarrow n)$(Fiber length of the nth fiber), wherein n represents the number of measured fibers).

The inorganic filler (D) may be surface-treated with a silane coupling agent or the like.

Examples of the silane coupling agent include, but are not limited to: aminosilanes such as $\gamma$-aminopropyltriethoxysilane, $\gamma$-aminopropyltrimethoxysilane, and N-$\beta$-(aminoethyl)-$\gamma$-aminopropylmethyldimethoxysilane; mercaptosilanes such as $\gamma$-mercaptopropyltrimethoxysilane and $\gamma$-mercaptopropyltriethoxysilane; epoxysilanes; and vinylsilanes.

Only one of these silane coupling agents may be used alone, or two or more thereof may be used in combination.

Among the silane coupling agents, an aminosilane is more preferred from the viewpoint of affinity for resins.

In the case of using the glass fibers as the inorganic filler (D), the glass fibers preferably further contain a sizing agent.

The sizing agent is a component that is applied to the surface of the glass fibers.

Examples of the sizing agent include copolymers containing a carboxylic anhydride group-containing unsaturated vinyl monomer and an unsaturated vinyl monomer other than the carboxylic anhydride group-containing unsaturated vinyl monomer as constitutional units, epoxy compounds, polycarbodiimide compounds, polyurethane resins, acrylic acid homopolymers, copolymers of acrylic acid and an additional copolymerizable monomer, and salts thereof with primary, secondary, and tertiary amines.

Only one of these sizing agents may be used alone, or two or more thereof may be used in combination.

Among them, a copolymer containing a carboxylic anhydride group-containing unsaturated vinyl monomer and an unsaturated vinyl monomer other than the carboxylic anhydride group-containing unsaturated vinyl monomer as constitutional units, an epoxy compound, a polycarbodiimide compound, or a polyurethane resin, or a combination thereof is preferred, and a copolymer containing a carboxylic anhydride group-containing unsaturated vinyl monomer and an unsaturated vinyl monomer other than the carboxylic anhydride group-containing unsaturated vinyl monomer as constitutional units is more preferred, from the viewpoint of the mechanical strength of the polyamide resin composition of the present embodiment.

Examples of the carboxylic anhydride group-containing unsaturated vinyl monomer in the copolymer containing a carboxylic anhydride group-containing unsaturated vinyl monomer and an unsaturated vinyl monomer other than the carboxylic anhydride group-containing unsaturated vinyl monomer as constitutional units include, but are not limited to, maleic anhydride, itaconic anhydride, and citraconic anhydride. Among them, maleic anhydride is preferred.

On the other hand, the unsaturated vinyl monomer other than the carboxylic anhydride group-containing unsaturated vinyl monomer refers to an unsaturated vinyl monomer that is different from the carboxylic anhydride group-containing unsaturated vinyl monomer.

Examples of the unsaturated vinyl monomer other than the carboxylic anhydride group-containing unsaturated vinyl monomer include, but are not limited to, styrene, $\alpha$-methylstyrene, ethylene, propylene, butadiene, isoprene, chloroprene, 2,3-dichlorobutadiene, 1,3-pentadiene, cyclooctadiene, methyl methacrylate, methyl acrylate, ethyl acrylate, and ethyl methacrylate. Among them, styrene or butadiene is preferred.

Among their combinations, one or more selected from the group consisting of a copolymer of maleic anhydride and butadiene, a copolymer of maleic anhydride and ethylene, and a copolymer of maleic anhydride and styrene, and mixtures thereof are more preferred.

The copolymer containing a carboxylic anhydride group-containing unsaturated vinyl monomer and an unsaturated vinyl monomer other than the carboxylic anhydride group-containing unsaturated vinyl monomer as constitutional units preferably has a weight-average molecular weight of 2,000 or higher, and more preferably has a weight-average molecular weight of 2,000 to 1,000,000 from the viewpoint of improvement in the flowability of the polyamide resin composition of the present embodiment. In the present specification, the weight-average molecular weight can be measured by GPC (gel permeation chromatography).

Examples of the epoxy compound include, but are not limited to: aliphatic epoxy compounds such as ethylene oxide, propylene oxide, butene oxide, pentene oxide, hexene oxide, heptene oxide, octene oxide, nonene oxide, decene oxide, undecene oxide, dodecene oxide, pentadecene oxide, and eicosene oxide; alicyclic epoxy compounds such as glycidol, epoxypentanol, 1-chloro-3,4-epoxybutane, 1-chloro-2-methyl-3,4-epoxybutane, 1,4-dichloro-2,3-epoxybutane, cyclopentene oxide, cyclohexene oxide, cycloheptene oxide, cyclooctene oxide, methylcyclohexene oxide, vinylcyclohexene oxide, and epoxidized cyclohexene methyl alcohol; terpene epoxy compounds such as pinene oxide; aromatic epoxy compounds such as styrene oxide, p-chlorostyrene oxide, and m-chlorostyrene oxide; epoxidized soybean oil; and epoxidized flaxseed oil.

The polycarbodiimide compound is a compound containing one or more carbodiimide groups (-N=C=N-), i.e., a compound obtained by the condensation of carbodiimide compounds.

The degree of condensation for the polycarbodiimide compound is preferably 1 to 20, more preferably 1 to 10. When the degree of condensation falls within the range of 1 to 20, an aqueous solution or an aqueous dispersion that offers favorable solubility or dispersibility is obtained. When the degree of condensation falls within the range of 1 to 10, an aqueous solution or an aqueous dispersion that offers more favorable solubility or dispersibility is obtained.

The polycarbodiimide compound is preferably a polycarbodiimide compound partially having a polyol segment. The polycarbodiimide compound partially having a polyol segment is easily solubilized and can be used more preferably as the sizing agent for the glass fibers or the carbon fibers.

The carbodiimide compound, i.e., the compound containing various carbodiimide groups (-N=C=N-) as described above, is obtained by the decarboxylation reaction of a diisocyanate compound in the presence of a carbodiimidization catalyst known in the art such as 3-methyl-1-phenyl-3-pholene-1-oxide.

An aromatic diisocyanate, an aliphatic diisocyanate, or an alicyclic diisocyanate, or a mixture thereof can be used as the diisocyanate compound.

Examples of the diisocyanate compound include, but are not limited to, 1,5-naphthalene diisocyanate, 4,4'-diphenylmethane diisocyanate, 4,4'-diphenyldimethylmethane diisocyanate, 1,3-phenylene diisocyanate, 1,4-phenylene diisocyanate, 2,4-tolylene diisocyanate, 2,6-tolylene diisocyanate, a mixture of 2,4-tolylene diisocyanate and 2,6-tolylene diisocyanate, hexamethylene diisocyanate, cyclohexane-1,4-diisocyanate, xylylene diisocyanate, isophorone diisocyanate, dicyclohexylmethane-4,4'-diisocyanate, methylcyclohexane diisocyanate, tetramethylxylylene diisocyanate, 2,6-diisopropylphenyl diisocyanate, and 1,3,5-triisopropylbenzene-2,4-diisocyanate.

These diisocyanate compounds are carbodiimidized to obtain carbodiimide compounds having two isocyanate groups at their ends. Of them, dicyclohexylmethane carbodiimide can be preferably used from the viewpoint of improvement in reactivity.

Alternatively, a polycarbodiimide compound having one isocyanate group at the end is obtained by, for example, a method which involves carbodiimidizing monoisocyanate compounds in equimolar amounts or a method which involves reacting a monoisocyanate compound with a polyalkylene glycol monoalkyl ether in equimolar amounts to form an urethane bond

Examples of the monoisocyanate compound include, but are not limited to, hexyl isocyanate, phenyl isocyanate, and cyclohexyl isocyanate.

Examples of the polyalkylene glycol monoalkyl ether include, but are not limited to, polyethylene glycol monomethyl ether and polyethylene glycol monoethyl ether.

The polyurethane resin can be any of those generally used as the sizing agent. Examples thereof include, but are not limited to, polyurethane resins synthesized from an isocyanate such as m-xylylene diisocyanate (XDI), 4,4'-methylenebis(cyclohexyl isocyanate) (HMDI), or isophorone diisocyanate (IPDI), and a polyester or polyether diol.

The acrylic acid homopolymers (polyacrylic acids) preferably have a weight-average molecular weight of 1,000 to 90,000, more preferably 1,000 to 25,000, from the viewpoint of affinity for resins.

Examples of the "additional copolymerizable monomer" constituting the copolymers of acrylic acid and an additional copolymerizable monomer include, but are not limited to, one or more selected from acrylic acid, maleic acid, methacrylic acid, vinylacetic acid, crotonic acid, isocrotonic acid, fumaric acid, itaconic acid, citraconic acid, and mesaconic acid (except for the case where the additional copolymerizable monomer is acrylic acid alone) among monomers having a hydroxy group and/or a carboxyl group.

The aforementioned polymer (including both of the homopolymer and the copolymer) of acrylic acid may be in the form of a salt.

Examples of the salt of the acrylic acid polymer include, but are not limited to, primary, secondary, and tertiary amines.

Specific examples thereof include triethylamine, triethanolamine, and glycine.

The degree of neutralization is set to preferably 20 to 90%, more preferably 40 to 60%, from the viewpoint of improvement in the stability of a mixed solution with other agents used in combination therewith (silane coupling agent, etc.) or reduction in amine odor.

The weight-average molecular weight of the acrylic acid polymer that forms a salt is not particularly limited and is preferably in the range of 3,000 to 50,000. The weight-average molecular weight is preferably 3,000 or higher from the viewpoint of improvement in glass fiber or carbon fiber sizing properties and is preferably 50,000 or lower from the viewpoint of improvement in the mechanical characteristics of the polyamide resin composition of the present embodiment.

Examples of the method for treating the glass fibers or the carbon fibers with various sizing agents mentioned above include a method which involves applying each of the aforementioned sizing agents to the glass fibers or the carbon fibers using a method known in the art such as a roller-type applicator in the step of producing the glass fibers or the carbon fibers known in the art, and drying the fiber strand thus produced for continuous reaction.

The fiber strand may be used directly as a roving or may be used as a chopped glass strand through a further cutting step.

The sizing agent is preferably applied (added) at a solid content corresponding to 0.2 to 3% by mass, more preferably 0.3 to 2% by mass, based on 100% by mass of the glass fibers or the carbon fibers. The amount of the sizing agent added is preferably 0.2% by mass or more in terms of a solid content based on 100% by mass of the glass fibers or the carbon fibers from the viewpoint of maintaining the bundling of the glass fibers or the carbon fibers. On the other hand, the amount of the sizing agent added is preferably 3% by mass or less from the viewpoint of improvement in the heat stability of the polyamide resin composition of the present embodiment.

The drying of the strand may be carried out after the cutting step, or the cutting step may be carried out after the drying of the strand.

(Additional component that may be contained in polyamide resin composition)

The polyamide resin composition of the present embodiment may further contain an additional component, if necessary, without impairing the effects of the present invention in addition to the aforementioned component (A) to component (D).

Examples of the additional component include, but are not limited to, ultraviolet absorbers, light degradation inhibitors, plasticizers, lubricants, mold release agents, nucleating agents, flame retardants, colorants, staining agents, pigments, and other thermoplastic resins.

In this context, these additional components largely differ in their properties. Therefore, their preferred contents that hardly impair the effects of the present embodiment vary among these components. Those skilled in the art can readily set the respective preferred contents of these additional components.

[Characteristics of polyamide resin composition]

(Number-average molecular weight (Mn) of polyamide resin composition)

The number-average molecular weight (Mn) of the polyamide resin composition of the present embodiment is preferably 10000 or higher from the viewpoint of mechanical physical properties and heat aging resistance. The number-average molecular weight of the polyamide resin composition is more preferably 12000 or higher, further preferably 15000 or higher.

In the present specification, the number-average molecular weight can be determined by gel permeation chromatography (GPC) using the polyamide resin composition as an assay sample and hexafluoroisopropanol (HFIP) as a solvent and substantially corresponds to the number-average molecular weight of the polyamide resin (A) or the polyamide resin (A) including a component covalently bonded to the polyamide resin (A), in the polyamide resin composition.

For setting the number-average molecular weight (Mn) of the polyamide resin composition of the present embodiment to within the range described above, a method is preferred which involves kneading the aluminic acid metal salt (B) in a melted state of the polyamide resin (A) using a single-screw or multiple-screw extruder.

For setting the number-average molecular weight (Mn) of the polyamide resin composition of the present embodiment to within the range described above, a method is also preferred which involves kneading the organic acid (C) in a melted state of the polyamide resin (A) using a single-screw or multiple-screw extruder.

For setting the number-average molecular weight (Mn) of the polyamide resin composition of the present embodiment to within the range described above, a method is more preferred which involves kneading the aluminic acid metal salt (B) and the organic acid (C) in a melted state of the polyamide resin (A) using a single-screw or multiple-screw extruder.

(Moisture content and peak in solid 27A1-NMR)

The polyamide resin composition of the present embodiment preferably has a moisture content of 1000 ppm or lower and has a peak at 0 ppm to 70 ppm in solid 27Al-NMR measurement.
The moisture content of the polyamide resin composition of the present embodiment can be determined according to JIS K7251 using pellets of the polyamide resin composition as an assay sample and a Karl-Fischer moisture meter.
The solid 27Al-NMR measurement can be specifically carried out using a nuclear magnetic resonance apparatus ("ECA500" manufactured by JEOL Ltd.), though the apparatus is not limited thereto.
Specifically, measurement conditions involving the number of spins of 8 k/s, PD of 5 s, 4.152 ppm potassium aluminum sulfate as an external standard, BF of 20.0 Hz, and a temperature of room temperature can be used, though the measurement conditions are not limited thereto.
The polyamide resin composition of the present embodiment preferably has a moisture content of 1000 ppm or lower and has a peak at 0 ppm to 70 ppm in solid 27Al-NMR measurement. As a result, excellent heat aging resistance and physical properties during water absorption are both achieved.
For allowing the polyamide resin composition of the present embodiment to have a moisture content of 1000 ppm or lower and have a peak at 0 ppm to 70 ppm in solid 27Al-NMR measurement, it is effective to add the organic acid (C).

(pH under predetermined condition)

Water obtained by being impregnated in 2.0 g of the polyamide resin composition of the present embodiment into 50 mL of distilled water and left at 80°C for 24 hours preferably has pH of 8 or lower.
The water obtained by being impregnated in 2.0 g of the polyamide resin composition of the present embodiment into 50 mL of distilled water and left at 80°C for 24 hours has pH of 8 or lower, whereby excellent heat aging resistance and mechanical physical properties during water absorption can both be achieved.
For allowing the water obtained by being impregnated in 2.0 g of the polyamide resin composition of the present embodiment into 50 mL of distilled water and left at 80°C for 24 hours to have pH of 8 or lower, it is effective to add the organic acid (C).

(Molecular weight distribution (Mw/Mn) of polyamide resin composition)

The polyamide resin composition of the present embodiment preferably has Mw/Mn of 2.0 or higher and has Mw/Mn of 3.0 or higher after heat aging at 120°C for 1000 hours.
Its Mw/Mn before the heat aging is more preferably 2.2 or higher, further preferably 2.4 or higher.
The Mw/Mn after heat aging at 120°C for 1000 hours is more preferably 3.2 or higher, further preferably 3.4 or higher.
The Mw/Mn before the heat aging and after the heat aging falls within the respective ranges described above, whereby the resulting polyamide resin composition is excellent in heat aging resistance.
The Mw and the Mn of the polyamide resin composition can be measured by GPC and can be specifically measured by a method described in Examples mentioned later.
For allowing the polyamide resin composition of the present embodiment to have Mw/Mn of 2.0 or higher, it is effective to add the "organic acid (C) that comprises a carboxylic anhydride group-containing unsaturated vinyl monomer as a component constituting the backbone and has a glass transition temperature Tg exceeding 0°C" mentioned above.
This addition of the "organic acid (C) that comprises a carboxylic anhydride group-containing unsaturated vinyl monomer as a component constituting the backbone and has a glass transition temperature Tg exceeding 0°C" mentioned above is a method suitable for setting the Mw/Mn after heat aging at 120°C for 1000 hours to 3.0 or higher.

(Measurement of degree of branching in polyamide resin composition by GPC-MALS-VISCO method)

Preferably, the polyamide resin composition of the present embodiment comprises a molecule having a molecular weight of 100,000 or higher that has a branched structure with one or more branch points in analysis based on a GPC-MALS-VISCO method, and the molecule having a molecular weight of 100,000 or higher contains a carboxylic anhydride functional group.

The number of branch points in the branched structure of the molecule having a molecular weight of 100,000 or higher is determined by analysis based on a GPC-MALS-VISCO method mentioned later.

In the analysis based on a GPC-MALS-VISCO method, specifically, the assay is conducted using an apparatus for use in GPC-MALS-VISCO measurement set to conditions described below, and the number of branch points is then calculated on the basis of the trifunctional random branching theory.

In the polyamide resin composition of the present embodiment, the containment of the molecule having the structure described above is effective for offering excellent heat aging resistance and also excellent mechanical physical properties during water absorption.

The molecule having a molecular weight of 100,000 or higher preferably has a branched structure with 2 or more branch points and more preferably has a branched structure with 3 or more branch points.

<Apparatus for use in GPC-MALS-VISCO measurement>

Apparatus: gel permeation chromatograph-multiangle laser light-scattering photometer

Configuration

Pump: MODEL 1100 manufactured by Agilent Technologies, Inc.
Detector: differential reflectometer Optilab rEX manufactured by Wyatt Technology Corp.
Multiangle light-scattering detector: DAWN HELEOS manufactured by Wyatt Technology Corp.
Viscosity detector: VISCOSTAR manufactured by Wyatt Technology Corp.
Column: Shodex HFIP-806M (two columns)
Temperature: 40°C for the columns
Solvent: hexafluoroisopropanol (HFIP: supplemented with 5 mM sodium trifluoroacetate)
Flow rate: 0.5 mL/min
Injection volume: 0.200 mL
Data processing: data processing system ASTRA manufactured by Wyatt Technology Corp.

<Method for calculating the number of branch points on basis of trifunctional random branching theory>

Specific viscosity $\eta$spi is calculated according to the following expression (1) from signal intensity DP ($\Delta$P) in a VISCO curve and inlet pressure Pi:

```
Expression (1):

ηspi = 4ΔP/(Pi - 2ΔP)
```

Subsequently, intrinsic viscosity [$\eta$]i at each elution time is determined according to the following expression (2):

```
Expression (2):

[η]i = (2(0.5)/Ci)(ηspi - Ln(ηspi + 1))(0.5)
```

(Ci: Concentration at elution time ti)

Next, the number of branch points ($\lambda$M) per molecule is calculated according to the following expressions (3) and (4) on the basis of the trifunctional random branching theory:

```
Expression (3):

g = ((1 + λM/7)(1/2) + 4λM/9)(-1/2)
```

```
Expression (4):

g(3/2) = ([η] of the polyamide resin composition)/([η] of

the polyamide resin (A))
```

The presence or absence of the carboxylic anhydride functional group contained in the molecule having a molecular weight of 100,000 or higher can be confirmed by a detection method mentioned later.

<Method for detecting carboxylic anhydride functional group in polyamide resin composition>

First, the molecule having a molecular weight of 100,000 or higher is separated by fractionation using a gel permeation chromatograph apparatus (solvent: hexafluoroisopropanol (HFIP)).

Next, the fraction solution is dried with a rotary evaporator and then confirmed to have a carboxylic anhydride functional group, for example, a maleic anhydride functional group, by use of 1H-NMR and IR.

In the polyamide resin composition of the present embodiment, for allowing the molecule having a molecular weight of 100,000 or higher to have a branched structure with one or more branch points in analysis based on a GPC-MALS-VISCO method and allowing the molecule having a molecular weight of 100,000 or higher to contain a carboxylic anhydride functional group, it is effective to add the "organic acid (C) that comprises a carboxylic anhydride group-containing unsaturated vinyl monomer as a component constituting the backbone and has a glass transition temperature Tg exceeding 0°C" mentioned above.

When the polyamide resin composition of the present embodiment is left at 300°C for 1 hour in an inert gas atmosphere using a thermogravimetric analysis (TGA) apparatus, the amount of decrease in mass is preferably 10% or less, more preferably 9% or less, further preferably 8% or less.

The thermogravimetric analysis (TGA) can be specifically conducted using TGA-50 manufactured by Shimadzu Corp., though the apparatus is not limited thereto.

For controlling the amount of decrease in mass to 10% or less when the polyamide resin composition of the present embodiment is left at 300°C for 1 hour in an inert gas atmosphere using a thermogravimetric analysis (TGA) apparatus, it is effective to use the organic acid (C) having high heat stability.

The high heat stability of the organic acid (C) means that the temperature at which the mass of the organic acid (C) used in the polyamide resin composition of the present embodiment is decreased by 5% in an inert gas atmosphere is high in the measurement using the thermogravimetric analysis (TGA) apparatus. Specifically, the temperature is preferably 260°C or higher, more preferably 270°C or higher, further preferably 280°C or higher.

In the polyamide resin composition of the present embodiment, the content of a reducing phosphorus compound is preferably 200 ppm or lower in terms of the content of elemental phosphorus. The content of the reducing phosphorus compound is 200 ppm or lower in terms of the content of elemental phosphorus, whereby the aluminic acid metal salt is prevented from degrading. Therefore, the resulting polyamide resin composition can have better heat aging resistance. The content of the reducing phosphorus compound is more preferably 100 ppm or lower in terms of the content of elemental phosphorus, further preferably 60 ppm or lower in terms of the content of elemental phosphorus, from a similar viewpoint.

[Method for producing polyamide resin composition]

The polyamide resin composition of the present embodiment can be produced by mixing the polyamide resin (A), the aluminic acid metal salt (B), the organic acid (C), the inorganic filler (D) except for the aluminic acid metal salt, and the additional component.

In the production of the polyamide resin composition of the present embodiment, a method can be preferably used which involves kneading the aluminic acid metal salt (B) and the organic acid (C) in a melted state of the polyamide resin (A) using a single-screw or multiple-screw extruder, specifically, adding the aluminic acid metal salt (B) and the organic acid (C) to the polyamide resin (A) by melt kneading.

Also, a method can be preferably used which involves well stirring and mixing in advance an aqueous solution of the aluminic acid metal salt (B) and pellets of the polyamide resin (A) to obtain a mixture, then dehydrating the mixture, and supplying the obtained polyamide resin pellets and the organic acid (C) from a feed port of an extruder, following by melt-kneading.

The addition of the aluminic acid metal salt (B) is preferably carried out by a method which involves kneading the aluminic acid metal salt (B) in a melted state of the polyamide resin (A) using a single-screw or multiple-screw extruder, from the viewpoint of the dispersibility of the aluminic acid metal salt (B). The addition of the organic acid (C) is preferably carried out by a method which involves kneading the organic acid (C) in a melted state of the polyamide resin (A) using a single-screw or multiple-screw extruder, from the viewpoint of productivity.

Preferably, the method for producing the polyamide resin composition of the present embodiment comprises the step of adding the aluminic acid metal salt (B) in a masterbatch form.

Specifically, the aluminic acid metal salt (B) having a higher concentration than the final concentration of the aluminic acid metal salt (B) added in the polyamide resin composition of interest is melt-kneaded with the polyamide resin (A) to prepare pellets, which are then melt-kneaded with other components to finally produce the polyamide resin composition of interest. This approach is more preferred from the viewpoint of heat aging resistance.

Also preferably, the method for producing the polyamide resin composition of the present embodiment comprises the step of adding the organic acid (C) in a masterbatch form.

Specifically, the organic acid (C) having a higher concentration than the final concentration of the organic acid (C) added in the polyamide resin composition of interest is melt-kneaded with the polyamide resin (A) to prepare pellets, which are then melt-kneaded with other components to finally produce the polyamide resin composition of interest. This approach is more preferred from the viewpoint of productivity.

Preferably, the method for producing the polyamide resin composition of the present embodiment comprises the step of adding the aluminic acid metal salt (B) and the organic acid (C) in a masterbatch form.

Specifically, the aluminic acid metal salt (B) and the organic acid (C) having higher concentrations than the final concentrations of the aluminic acid metal salt (B) and the organic acid (C) added in the polyamide resin composition of interest are melt-kneaded with the polyamide resin (A) to prepare pellets, which are then melt-kneaded with other components to finally produce the polyamide resin composition of interest. This approach is more preferred from the viewpoint of improvement in physical properties during water absorption.

[Molded product comprising polyamide resin composition]

The molded product of the present embodiment comprises the polyamide resin composition according to the aforementioned embodiment.

The molded product of the present embodiment is obtained, for example, by the injection molding of the polyamide resin composition, without particular limitations.

The molded product according to the present embodiment can be preferably used as material parts for various uses, for example, for automobiles, for machinery industry, for electric or electronic uses, for industrial materials, for engineering materials, and for daily necessities or domestic articles, without particular limitations. The molded product according to the present embodiment is particularly preferably used as a material part for automobiles.

The molded product of the present embodiment has excellent heat aging resistance.

[Use of polyamide resin composition]

A molded product excellent in heat aging resistance and physical properties during water absorption can be produced by use of the polyamide resin composition containing the polyamide resin (A), the aluminic acid metal salt (B), and the organic acid (C).

Specifically, the addition of the aluminic acid metal salt (B), particularly, sodium aluminate, to the polyamide resin (A) can improve the heat aging resistance of the polyamide resin composition to the extent that the polyamide resin composition can be preferably used in a material part for automobiles.

Specifically, the present embodiment can preferably provide a polyamide resin composition, a molded product, and a material part for automobiles, comprising sodium aluminate as the aluminic acid metal salt (B) as an additive for improving heat aging resistance.

Examples

Hereinafter, the present invention will be described in detail with reference to specific Examples and Comparative Examples. However, the present invention is not intended to be limited by Examples below.

The following measurement methods were used for evaluating samples according to Examples and Comparative Examples.

[Measurement method]

(Relative viscosity in 98% sulfuric acid ($\eta$r))

In Examples and Comparative Examples (hereinafter, also simply referred to as "each example") mentioned later, the relative viscosity in 98% sulfuric acid (ηr) of the polyamide resin (A) was measured according to JISK6920.

(Terminal group concentration)

In Examples and Comparative Examples mentioned later, the terminal group concentrations (terminal amino group concentration and terminal carboxyl group concentration) of the polyamide resin (A) were determined by 1H-NMR measurement at 60°C using a bisulfate solvent.
The measurement apparatus used was ECA500 manufactured by JEOL Ltd. The terminal group concentrations were calculated from the integrated values of peaks corresponding to the terminal amino groups and the terminal carboxyl groups in the polyamide resin (A) to obtain (terminal amino group concentration/terminal carboxyl group concentration).

(Melting point)

In Examples and Comparative Examples mentioned later, the melting point of the crystalline resin was measured as follows according to JIS-K7121 using Diamond-DSC manufactured by PerkinElmer Inc.
The measurement was carried out in a nitrogen atmosphere.
Approximately 10 mg of each sample was heated from 50°C to 300°C at a rate of temperature increase of 20°C/min. The endothermic peak temperature that appeared here was used as the melting point.

(Initial tensile strength)

Pellets of the polyamide resin composition produced in each of Examples and Comparative Examples were molded into a molded piece as a multipurpose test specimen (type A) according to ISO 3167 using an injection molding machine (PS-40E; manufactured by Nissei Plastic Industrial Co., Ltd.).
In this operation, the injection and pressure keeping time was set to 25 seconds, and the cooling time was set to 15 seconds.
The mold temperature and the cylinder temperature were set to the temperatures described in the production examples of the polyamide resin (A) mentioned later.
The obtained multipurpose test specimen (type A) was used in the tensile test at a rate of pulling of 5 mm/min according to ISO 527 to measure the initial tensile strength (MPa).

(Tensile strength at 120°C)

The multipurpose test specimen (type A) was used in the tensile test at 120°C at a rate of pulling of 5 mm/min according to ISO 527 to measure the tensile strength (MPa) at 120°C.

(Heat aging resistance)

The multipurpose test specimen (type A) in the preceding paragraph (Initial tensile strength) was heat-aged by heating at 230°C in a hot-air circulating oven.
After a predetermined time, the test specimen was taken out of the oven, cooled at 23°C for 24 hours or longer, and then subjected to the tensile test in the same way as the aforementioned method at a rate of pulling of 5 mm/min according to ISO 527 to measure each tensile strength (MPa).
By this approach, the heating time in which the tensile strength was decreased by half (h: hour) was determined as "strength half-life in 230°C aging".

(Rate of tensile strength retention after water absorption)

Pellets of the polyamide resin composition produced in each of Examples and Comparative Examples mentioned later were molded into a molded piece as a multipurpose test specimen (type A) according to ISO 3167 using an injection molding machine (PS-40E; manufactured by Nissei Plastic Industrial Co., Ltd.).
In this operation, the injection and pressure keeping time was set to 25 seconds, and the cooling time was set to 15 seconds.
The mold temperature and the cylinder temperature were set to the temperatures described in the production examples of the polyamide resin (A) mentioned later.
The multipurpose test specimen (type A) thus molded was fully dipped in distilled water and allowed to absorb water at 80°C for 48 hours. Then, the test specimen was cooled at 23°C for 24 hours or longer, then taken out of distilled water, and subjected to the tensile test at a rate of pulling of 5 mm/min according to ISO 527 to measure each tensile strength (MPa). The tensile strength after water absorption was determined by this approach.

The rate of tensile strength retention after water absorption was calculated according to the following expression:

$$\text{Rate of tensile strength retention after water absorption} = (\text{Tensile strength after water absorption} / \text{Initial tensile strength}) \times 100 \, [\%]$$

(Notched Charpy impact strength)

The multipurpose test specimen (type A) in the preceding paragraph (Initial tensile strength) was cut to obtain a test specimen of 80 mm in length x 10 mm in width x 4 mm in thickness.

This test specimen was used to measure the notched Charpy impact strength $(kJ/m^2)$ according to ISO 179.

(Measurement of number-average molecular weight (Mn) and weight-average molecular weight (Mw), and calculation of Mw/Mn)

Mn and Mw were measured by GPC (gel permeation chromatography), and Mw/Mn was calculated.

The solvent used was hexafluoroisopropanol, and a value based on PMMA was determined.

To measure Mn and Mw after aging at 120°C for 1000 hours, the multipurpose test specimen (type A) in the preceding paragraph (Initial tensile strength) was heat-aged by heating at 120°C in a hot-air circulating oven, taken out of the oven after 1000 hours, and cooled at 23°C for 24 hours or longer. Then, the test specimen was assayed by the aforementioned approach.

(Solid 27Al-NMR measurement)

The solid 27Al-NMR measurement was carried out using a nuclear magnetic resonance apparatus ("ECA500" manufactured by JEOL Ltd.).

Measurement conditions involving the number of spins of 8 k/s, PD of 5 s, 4.152 ppm potassium aluminum sulfate as an external standard, BF of 20.0 Hz, and a temperature of room temperature were used.

(pH measurement of polyamide resin composition)

2 g of the polyamide resin composition was impregnated into 50 mL of distilled water and left for 24 hours under a condition of 80°C.

The temperature was controlled at room temperature for 24 hours or longer. Then, the pH was measured using a desktop pH-specialized meter D-71AC (manufactured by HORIBA, Ltd.).

The measured pH value was described as "pH from dipping in water" in the tables given below.

(Thermogravimetric analysis (TGA) of polyamide resin composition)

The thermogravimetric analysis (TGA) of the polyamide resin composition was conducted using TGA-50 manufactured by Shimadzu Corp.

Measurement conditions in Examples involved measuring the amount of decrease in mass when the polyamide resin composition was left at 300°C for 1 hour in an inert gas atmosphere. Specifically, the amount of decrease in mass was defined as the difference between the mass before leaving and the mass after leaving under the conditions described above.

(Alkalinity value of aluminic acid metal salt / Acid value of organic acid)

The alkalinity value of the aluminic acid metal salt (B) contained in 100 parts by mass of the polyamide resin (A) was defined on the basis of JISK0070. In other words, the alkalinity value was the amount (mg) of potassium hydroxide necessary for neutralizing hydroxy group-bound acetic acid when 1 g of a sample was acetylated.

The acid value of the organic acid (C) contained in 100 parts by mass of the polyamide resin (A) was defined on the basis of JISK0070. In other words, the acid value was the amount (mg) of potassium hydroxide necessary for neutralizing free fatty acids, resin acids, and the like contained in 1 g of a sample.

The ratio between these values was indicated by Alkalinity value of aluminic acid metal salt / Acid value of organic acid.

(Alkalinity value of aluminic acid metal salt / (Acid value of organic acid + Acid value of carboxyl group terminus))

The acid value of the carboxyl group terminus was defined on the basis of JISK0070. In other words, the acid value was the amount (mg) of potassium hydroxide necessary for neutralizing free fatty acids, resin acids, and the like contained in 1 g of a sample.

The acid value of the organic acid + the acid value of the carboxyl group terminus was the sum of the acid value of the organic acid and the acid value of the carboxyl group terminus. The ratio between this sum and the alkalinity value of the aluminic acid metal salt was indicated by (Alkalinity value of aluminic acid metal salt / (Acid value of organic acid + Acid value of carboxyl group terminus)).

(Presence or absence of branched structure with one or more branch points in molecule having molecular weight of 100,000 or higher)

The presence or absence of a branched structure with one or more branch points in a molecule having a molecular weight of 100,000 or higher was confirmed by assaying the polyamide resin composition under the conditions given below using the apparatus given below.

<Apparatus for use in GPC-MALS-VISCO measurement>

Apparatus: gel permeation chromatograph-multiangle laser light-scattering photometer

Configuration

Pump: MODEL 1100 manufactured by Agilent Technologies, Inc.
Detector: differential reflectometer Optilab rEX manufactured by Wyatt Technology Corp.
Multiangle light-scattering detector: DAWN HELEOS manufactured by Wyatt Technology Corp.
Viscosity detector: VISCOSTAR manufactured by Wyatt Technology Corp.
Column: Shodex HFIP-806M (two columns)
Temperature: 40°C for the columns
Solvent: hexafluoroisopropanol (HFIP: supplemented with 5 mM sodium trifluoroacetate)
Flow rate: 0.5 mL/min
Injection volume: 0.200 mL
Data processing: data processing system ASTRA manufactured by Wyatt Technology Corp.

<Method for calculating the number of branch points on basis of trifunctional random branching theory>

Specific viscosity $\eta$spi was calculated according to the following expression (1) from signal intensity DP ($\Delta$P) in a VISCO curve and inlet pressure Pi:

$$\text{Expression (1):}$$

$$\eta\text{spi} = 4\Delta P/(Pi - 2\Delta P)$$

Subsequently, intrinsic viscosity [$\eta$]i at each elution time was determined according to the following expression (2):

Expression (2):

$$[\eta]i = (2(0.5)/Ci)(\eta spi - Ln(\eta spi + 1))(0.5)$$

(Ci: Concentration at elution time ti)

Next, the number of branch points ($\lambda$M) per molecule was calculated according to the following expressions (3) and (4) on the basis of the trifunctional random branching theory:

Expression (3):

$$g = ((1 + \lambda M/7)(1/2) + 4\lambda M/9)(-1/2)$$

Expression (4):

$$g(3/2) = ([\eta] \text{ of the polyamide resin composition})/([\eta] \text{ of the polyamide resin (A)})$$

(Presence of absence of carboxylic anhydride functional group in molecule having molecular weight of 100,000 or higher)

The presence or absence of the carboxylic anhydride functional group contained in the molecule having a molecular weight of 100,000 or higher was confirmed by a detection method mentioned later.

<Method for detecting carboxylic anhydride functional group in polyamide resin composition>

First, the molecule having a molecular weight of 100,000 or higher was separated by fractionation using a gel permeation chromatograph apparatus (solvent: hexafluoroisopropanol (HFIP)).
Next, the fraction solution was dried with a rotary evaporator and then confirmed to have a maleic anhydride functional group by use of 1H-NMR and IR.

(Concentration of sodium hypophosphite in terms of elemental phosphorus)

The elemental phosphorus concentration of the reducing phosphorus compound based on the polyamide resin (A) can be specifically measured by a method that follows procedures described below in the paragraphs (1) and (2). Since the sodium hypophosphite was a compound containing one elemental phosphorus, the elemental phosphorus molar concentration of the sodium hypophosphite can be identified as the molar concentration of the reducing phosphorus compound.

<(1) Concentration of elemental phosphorus>

The sample (polyamide resin composition) was weighed such that the content of the polyamide resin (A) was 0.5 g. 20 mL of concentrated sulfuric acid was added thereto, and the mixture was wet-decomposed on a heater.
After cooling, 5 mL of hydrogen peroxide was added thereto, and the mixture was heated on a heater and concentrated until the total amount becomes 2 to 3 mL.
After cooling again, the amount of the mixture was adjusted to 500 mL with pure water.
The apparatus used was IRIS/IP manufactured by Thermo Jarrell Ash Corp, and the concentration was determined at a wavelength of 213.618 (Nm) by inductively coupled plasma (ICP) high-frequency atomic emission spectroscopy.
The concentration of elemental phosphorus was based on this quantified value and indicated by concentration CP (mol) of elemental phosphorus based on $10^6$ g of the polyamide resin.

<(2) Concentration of reducing phosphorus compound (hypophosphorous acid ion, phosphorous acid ion, or phosphoric acid ion)>

The sample (polyamide resin composition) was weighed such that the content of the polyamide resin (A) was 50 g. 100 mL of water was added thereto, and the mixture was sonicated at room temperature for 15 minutes and then filtered to obtain a filtrate. Then, the concentration (mol) ratios of a hypophosphorous acid ion, a phosphorous acid ion, and a phosphoric acid ion were measured using a capillary electrophoresis apparatus (HP3D) manufactured by Hewlett-Packard Company.

The concentration ratios were calculated on the basis of a calibration curve prepared by similarly assaying hypophosphorous acid ion standard solutions, phosphorous acid ion standard solutions, and phosphoric acid ion standard solutions having known concentrations.

Elemental phosphorus concentration X of each reducing phosphorus compound can be determined according to the following expression in terms of the concentration (mol) of elemental phosphorus based on the content $10^6$ g of the polyamide resin (A) in the polyamide resin composition.

```
Concentration X of the reducing phosphorus compound in terms of elemental phosphorus = CP × (CP1 + CP2)/(CP1

+ CP2 + CP3)
```

CP: concentration (mol) of elemental phosphorus based on the content $10^6$ g of the polyamide resin (A) in the polyamide resin composition determined in the paragraph (1)
CP1: concentration (mol) ratio of the hypophosphorous acid ion determined in the paragraph (2)
CP2: concentration (mol) ratio of the phosphorous acid ion determined in the paragraph (2)
CP3: concentration (mol) ratio of the phosphoric acid ion determined in the paragraph (2)

Tables 5 and 9 below show the molar concentration [mmol/kg] of elemental phosphorus based on the content $10^6$ g of the polyamide resin (A) in the polyamide resin composition produced in each of Examples mentioned later.

Since the sodium hypophosphite was a compound containing one elemental phosphorus, the elemental phosphorus molar concentration of the sodium hypophosphite can be identified as the molar concentration of the reducing phosphorus compound.

The polyamide resin composition of the present invention can contain a hypophosphorous acid compound. The content of the hypophosphorous acid compound was preferably 1.0 mmol/kg or lower, more preferably 0.4 mmol/kg or lower, in terms of the molar concentration of elemental phosphorus.

[Starting material]

The following starting materials were used in Examples and Comparative Examples.

((A) Polyamide resin)

<Polyamide resin A-1 (PA66)>

30 kg of an aqueous solution of equimolar salts of 50% by mass of hexamethylenediamine and adipic acid was prepared and sufficiently stirred.

The aqueous solution of the starting materials for polyamide 66 (hereinafter, also simply referred to as an aqueous solution of the starting materials) was charged into a 70 L autoclave having a stirring apparatus and a discharge nozzle in a lower area.

Then, the aqueous solution was sufficiently stirred at a temperature of 50°C.

Subsequently, the atmosphere was replaced with nitrogen, and the temperature was then increased from 50°C to approximately 270°C with stirring. This heating was continued for approximately 1 hour while water was removed from the system such that the pressure in the autoclave was kept at approximately 1.77 MPa.

Then, the pressure was decreased to atmospheric pressure over approximately 1 hour. The reaction product was further kept at approximately 270°C at atmospheric pressure for approximately 1 hour. Then, the stirring was stopped.

The polymer was discharged in a strand form from the lower nozzle and subjected to water cooling and cutting to obtain pellets.

The relative viscosity in 98% sulfuric acid of <polyamide resin A-1> was 2.8.

The terminal amino group concentration was 46 $\mu$mol/g, and the terminal carboxyl group concentration was 72 $\mu$mol/g.

Specifically, terminal amino group concentration/terminal carboxyl group concentration was 0.64.

The melting point was 264°C.

The mold temperature and the cylinder temperature were set to 80°C and 290°C, respectively, for molding the polyamide resin composition using <polyamide resin A-1>.

<Polyamide resin A-2 (PA66)>

Additional 900 g of adipic acid was added to the aqueous solution of the starting materials.

Other conditions were set in the same way as in the method for producing <polyamide resin A-1> to produce <polyamide resin A-2>.

The relative viscosity in 98% sulfuric acid of <polyamide resin A-2> was 2.2.

The terminal amino group concentration was 33 $\mu$mol/g, and the terminal carboxyl group concentration was 107 $\mu$mol/g.

Specifically, terminal amino group concentration/terminal carboxyl group concentration was 0.3.

The melting point was 264°C, and the Vicat softening point was 238°C.

The mold temperature and the cylinder temperature were set to 80°C and 290°C, respectively, for molding the polyamide resin composition using <polyamide resin A-2>.

<Polyamide resin A-3 (PA66)>

Additional 900 g of hexamethylenediamine was added to the aqueous solution of the starting materials.

Other conditions were set in the same way as in the method for producing <polyamide resin A-1> to produce <polyamide resin A-3>.

The relative viscosity in 98% sulfuric acid of <polyamide resin A-3> was 2.4. The terminal amino group concentration was 78 $\mu$mol/g, and the terminal carboxyl group concentration was 52 $\mu$mol/g. Specifically, terminal amino group concentration/terminal carboxyl group concentration was 1.5.

The melting point was 264°C.

The mold temperature and the cylinder temperature were set to 80°C and 290°C, respectively, for molding the polyamide resin composition using <polyamide resin A-3>.

<Polyamide resin A-4 (PA66/6T)>

<Polyamide resin A-4 (PA66/6T)> was produced according to the production example of National Publication of International Patent Application No. 2013-501094.

The relative viscosity in 98% sulfuric acid of <polyamide resin A-4> was 2.9.

The terminal amino group concentration was 42 $\mu$mol/g, and the terminal carboxyl group concentration was 65 $\mu$mol/g. Specifically, terminal amino group concentration/terminal carboxyl group concentration was 0.6.

The mold temperature and the cylinder temperature were set to 80°C and 290°C, respectively, for molding the polyamide resin composition using <polyamide resin A-4>.

<Polyamide resin A-5 (PA9T)>

<Polyamide resin A-5 (PA9T)> was produced according to the production example of Japanese Patent Laid-Open No. 2013-40346.

The relative viscosity in 98% sulfuric acid of <polyamide resin A-5> was 2.9, and the melting point was 304°C.

The terminal amino group concentration was 42 $\mu$mol/g, and the terminal carboxyl group concentration was 52 $\mu$mol/g. Specifically, terminal amino group concentration/terminal carboxyl group concentration was 0.8.

The mold temperature and the cylinder temperature were set to 120°C and 330°C, respectively, for molding the polyamide resin composition using <polyamide resin A-5>.

<Polyamide resin A-6 (PA46)>

Trade name Stanyl(R) KS200 (manufactured by DSM, melting point: 290°C) was used as polyamide 46 (hereinafter, abbreviated to "PA46").

The mold temperature and the cylinder temperature were set to 120°C and 300°C, respectively, for molding the polyamide resin composition using <polyamide resin A-6>.

<Polyamide resin A-7 (PA6)>

Trade name SF1013A (manufactured by Ube Industries, Ltd., melting point: 224°C) was used as polyamide 6 (hereinafter, abbreviated to "PA6").
In Examples, this polyamide resin was used as a blend with <polyamide resin A-1>, and its molding conditions followed the conditions for <polyamide resin A-1>.

<polyamide resin A-8 (PA610)>

<polyamide resin A-8 (PA610)> was produced according to the production example of Japanese Patent Laid-Open No. 2011-148997.
The relative viscosity in 98% sulfuric acid of <polyamide resin A-8> was 2.3.
The terminal amino group concentration was 58 $\mu$mol/g, and the terminal carboxyl group concentration was 79 $\mu$mol/g. Specifically, terminal amino group concentration/terminal carboxyl group concentration was 0.7.
In Examples, this polyamide resin was used as a blend with <polyamide resin A-1>, and its molding conditions followed the conditions for <polyamide resin A-1>.

((B) Aluminic acid metal salt)

<Sodium aluminate B-I>

Sodium aluminate manufactured by Wako Pure Chemical Industries, Ltd. was used.

(Component (C): organic acid, etc.)

<C-1>

Citric acid manufactured by Tokyo Chemical Industry Co., Ltd. was used.
The temperature at which the mass was decreased by 5% in an inert gas atmosphere was 191°C in measurement using a thermogravimetric analysis (TGA) apparatus.

<C-2>

Ethylenediaminetetraacetic acid manufactured by Tokyo Chemical Industry Co., Ltd. was used.

<C-3>

Adipic acid manufactured by Tokyo Chemical Industry Co., Ltd. was used.

<C-4>

Dipentaerythritol manufactured by ALFA AESAR was used.

<C-5>

Isophthalic acid manufactured by Tokyo Chemical Industry Co., Ltd. was used.
The temperature at which the mass was decreased by 5% in an inert gas atmosphere was 281°C in measurement using a thermogravimetric analysis (TGA) apparatus.

<C-6>

Terephthalic acid manufactured by Tokyo Chemical Industry Co., Ltd. was used.
The temperature at which the mass was decreased by 5% in an inert gas atmosphere was 293°C in measurement using a thermogravimetric analysis (TGA) apparatus.

<C-7>

Acetic acid manufactured by Tokyo Chemical Industry Co., Ltd. was used.

<C-8>

1,2,4-benzenetricarboxylic acid manufactured by Tokyo Chemical Industry Co., Ltd. was used.

<C-9>

Benzoic acid manufactured by Tokyo Chemical Industry Co., Ltd. was used.

<C-10>

Sebacic acid manufactured by Tokyo Chemical Industry Co., Ltd. was used.
The temperature at which the mass was decreased by 5% in an inert gas atmosphere was 227°C in measurement using a thermogravimetric analysis (TGA) apparatus.

<C-11>

A ethylene-maleic anhydride copolymer having a weight-average molecular weight of 60,000, Tg of 150°C, and an acid value of 0.28 was used.

<C-12>

A ethylene-maleic anhydride copolymer having a weight-average molecular weight of 400,000, Tg of 150°C, and an acid value of 0.28 was used.

<C-13>

A styrene-maleic anhydride copolymer having a weight-average molecular weight of 60,000, Tg of 250°C, and an acid value of 0.1 was used.

<C-14>

Maleic anhydride-grafted polypropylene having a weight-average molecular weight of 100,000, Tg of 100°C, and an acid value of 0.01 was used.

((D) Inorganic filler except for aluminic acid metal salt)

<Glass fibers D-1>

The total mass was adjusted to 100% by mass by dilution with water such that, based on solid contents, a polyurethane resin was 2% by mass (trade name: Bondic(R) 1050, manufactured by DIC Corp.)), an ethylene-maleic anhydride copolymer (manufactured by Wako Pure Chemical Industries, Ltd.) was 8% by mass, $\gamma$-aminopropyltriethoxysilane was 0.6% by mass (trade name: KBE-903, (manufactured by Shin-Etsu Chemical Co., Ltd.)), and a lubricant was 0.1% by mass (trade name: Carnauba wax (manufactured by S. Kato & Co.)) to obtain a glass fiber sizing agent.
The glass fiber sizing agent was attached to melt-spun glass fibers having a number-average fiber diameter of 10 $\mu$m.
Specifically, the glass fiber sizing agent was applied to the glass fibers on their way to be taken up on a rotating drum using an applicator located at a predetermined position. Subsequently, this was dried to obtain a roving of a glass fiber bundle surface-treated with the glass fiber sizing agent (glass roving). The bundle involved 1,000 glass fibers.
The amount of the glass fiber sizing agent attached was 0.6% by mass. This roving was cut into a length of 3 mm to obtain a chopped glass strand. This chopped strand was used as <glass fibers D-I>.

<Glass fibers D-2>

No ethylene-maleic anhydride copolymer was used. Other conditions were set in the same way as in the glass fibers (D-1). The prepared glass fibers were used as glass fibers (D-2).

<Reducing phosphorus compound>

Hypophosphorous acid manufactured by Taihei Chemical Industrial Co., Ltd. was used.

[Example 1]

The extruder used was a twin-screw extruder (ZSK-26MC; manufactured by Coperion GmbH (Germany)).
This twin-screw extruder has an upstream feed port in the first barrel on the upstream side and has a downstream feed port in the 9th barrel. Its L/D (Length of the cylinder of the extruder / Diameter of the cylinder of the extruder) was 48 (the number of barrels: 12).
In this twin-screw extruder, the temperature from the upstream feed port to the die was set to the cylinder temperature described in each item of ((A) Polyamide resin) described above.
The number of screw revolutions was set to 300 rpm, and the discharge rate was set to 25 kg/hr.
Under these conditions, the component (A), the component (B), and the component (C) were supplied from the upstream feed port, while the component (D) was supplied from the downstream feed port so as to attain the ratios described in the upper boxes of Table 1 below. The mixture was melt-kneaded to produce pellets of a polyamide resin composition.
The obtained polyamide resin composition was molded, and the molded piece was used to carry out various evaluations.
These evaluation results, etc., are shown in Table 1 below.

[Examples 2 to 45 and Comparative Examples 1 to 6]

According to the composition described in Tables 1 to 9, other conditions were set in the same way as in Example 1 to produce each polyamide resin composition, which was then molded. The molded piece was used to carry out various measurements.
The hypophosphorous acid was supplied from the upstream feed port.
These measurement results, etc., are shown in Tables 1 to 9 below.

[Example 46]

The component (B) and the component (C) were added in a masterbatch form. A specific approach will be described below.
The extruder used was a twin-screw extruder (ZSK-26MC; manufactured by Coperion GmbH (Germany)).
This twin-screw extruder has an upstream feed port in the first barrel on the upstream side and has a downstream feed port in the 9th barrel. Its L/D (Length of the cylinder of the extruder / Diameter of the cylinder of the extruder) was 48 (the number of barrels: 12).
In this twin-screw extruder, the temperature from the upstream feed port to the die was set to the cylinder temperature described in each item of ((A-1) Polyamide resin) described above.
The number of screw revolutions was set to 300 rpm, and the discharge rate was set to 25 kg/hr.
Under these conditions, 100 parts by mass of the polyamide 66 (A-1), 5 parts by mass of the sodium aluminate (B-1), and 5 parts by mass of the isophthalic acid (C-5) were supplied from the upstream feed port and melt-kneaded to produce pellets of a polyamide resin composition in a masterbatch (MB) form.
According to the composition described in Table 10, the obtained masterbatch was melt-kneaded with the polyamide 66 (A-1) and the glass fibers (D-1) in the same way as in Example 1 to produce a polyamide resin composition. Then, the polyamide resin composition was molded, and the molded piece was used to carry out various evaluations. These measurement results are shown in Table 10 below.

[Examples 47 and 48]

By use of the same approach as in Example 46, the component (B) and the component (C) were added in a masterbatch form, and pellets of a polyamide resin composition were produced according to the composition shown in Table 10. Then, the polyamide resin composition was molded, and the molded piece was used to carry out various evaluations. These measurement results are shown in Table 10 below.

[Example 49]

30 kg of an aqueous solution of equimolar salts of 50% by mass of hexamethylenediamine and adipic acid was prepared and sufficiently stirred.

The aqueous solution of the starting materials for polyamide 66 was charged into a 70 L autoclave having a stirring apparatus and a discharge nozzle in a lower area

Subsequently, according to the composition described in Table 10, the component (B) and the component (C) were added (specifically, the sodium aluminate (B-1) was added at 1.0 part by mass based on 100 parts by mass of the polyamide resin, and the isophthalic acid (C-5) was added at 1.0 part by mass based on 100 parts by mass of the polyamide resin).

Then, the aqueous solution was sufficiently stirred at a temperature of 50°C.

Subsequently, the atmosphere was replaced with nitrogen, and the temperature was then increased from 50°C to approximately 270°C with stirring. This heating was continued for approximately 1 hour while water was removed from the system such that the pressure in the autoclave was kept at approximately 1.77 MPa.

Then, the pressure was decreased to atmospheric pressure over approximately 1 hour. The reaction product was further kept at approximately 270°C at atmospheric pressure for approximately 1 hour. Then, the stirring was stopped.

The polymer was discharged in a strand form from the lower nozzle and subjected to water cooling and cutting to obtain pellets.

The relative viscosity in 98% sulfuric acid of the resin was 2.8. The terminal amino group concentration was 46 $\mu$mol/g, and the terminal carboxyl group concentration was 72 $\mu$mol/g. Specifically, terminal amino group concentration/terminal carboxyl group concentration was 0.64.

The polyamide resin was supplied from the upstream feed port, while 50 parts by mass of the glass fibers (D-1) based on the component (A) were supplied from the downstream feed port. The mixture was melt-kneaded to produce pellets of a polyamide resin composition.

The obtained polyamide resin composition was molded, and the molded piece was used to carry out various evaluations. These measurement results are shown in Table 10 below.

[Examples 50 and 51]

By use of the same approach as in Example 49, the component (B) and the component (C) were added, and pellets of a polyamide resin composition were produced according to the composition shown in Table 10. Then, the polyamide resin composition was molded, and the molded piece was used to carry out various evaluations. These measurement results are shown in Table 10 below.

[Example 52]

30 kg of an aqueous solution of equimolar salts of 50% by mass of hexamethylenediamine and adipic acid was prepared and sufficiently stirred.

The aqueous solution of the starting materials for polyamide 66 was charged into a 70 L autoclave having a stirring apparatus and a discharge nozzle in a lower area.

Subsequently, according to the composition described in Table 10, the component (B) was added (specifically, the sodium aluminate (B-1) was added at 1.0 part by mass based on 100 parts by mass of the polyamide resin).

Then, the aqueous solution was sufficiently stirred at a temperature of 50°C.

Subsequently, the atmosphere was replaced with nitrogen, and the temperature was then increased from 50°C to approximately 270°C with stirring. This heating was continued for approximately 1 hour while water was removed from the system such that the pressure in the autoclave was kept at approximately 1.77 MPa.

Then, the pressure was decreased to atmospheric pressure over approximately 1 hour. The reaction product was further kept at approximately 270°C at atmospheric pressure for approximately 1 hour. Then, the stirring was stopped.

The polymer was discharged in a strand form from the lower nozzle and subjected to water cooling and cutting to obtain pellets.

The relative viscosity in 98% sulfuric acid of the resin was 2.8. The terminal amino group concentration was 46 $\mu$mol/g, and the terminal carboxyl group concentration was 72 $\mu$mol/g. Specifically, terminal amino group concentration/terminal carboxyl group concentration was 0.64.

The polyamide resin and 1 part by mass of the isophthalic acid (C-5) based on the component (A) were supplied from the upstream feed port, while 50 parts by mass of the glass fibers (D-1) based on the component (A) were supplied from the downstream feed port. The mixture was melt-kneaded to produce pellets of a polyamide resin composition.

The obtained polyamide resin composition was molded, and the molded piece was used to carry out various evaluations. These measurement results are shown in Table 10 below.

[Examples 53 and 54]

By use of the same approach as in Example 52, the component (B) and the component (C) were added, and pellets of a polyamide resin composition were produced according to the composition shown in Table 10. Then, the polyamide resin composition was molded, and the molded piece was used to carry out various evaluations. These measurement results are shown in Table 10 below.

[Example 55]

30 kg of an aqueous solution of equimolar salts of 50% by mass of hexamethylenediamine and adipic acid was prepared and sufficiently stirred.

The aqueous solution of the starting materials for polyamide 66 was charged into a 70 L autoclave having a stirring apparatus and a discharge nozzle in a lower area.

Subsequently, according to the composition described in Table 10, the component (C) was added (specifically, the isophthalic acid (C-5) was added at 1.0 part by mass based on 100 parts by mass of the polyamide resin).

Then, the aqueous solution was sufficiently stirred at a temperature of 50°C.

Subsequently, the atmosphere was replaced with nitrogen, and the temperature was then increased from 50°C to approximately 270°C with stirring. This heating was continued for approximately 1 hour while water was removed from the system such that the pressure in the autoclave was kept at approximately 1.77 MPa.

Then, the pressure was decreased to atmospheric pressure over approximately 1 hour. The reaction product was further kept at approximately 270°C at atmospheric pressure for approximately 1 hour. Then, the stirring was stopped.

The polymer was discharged in a strand form from the lower nozzle and subjected to water cooling and cutting to obtain pellets.

The relative viscosity in 98% sulfuric acid of the resin was 2.8. The terminal amino group concentration was 46 $\mu$mol/g, and the terminal carboxyl group concentration was 72 $\mu$mol/g. Specifically, terminal amino group concentration/terminal carboxyl group concentration was 0.64.

The polyamide resin and 1.0 part by mass of the sodium aluminate (B-1) based on the component (A) were supplied from the upstream feed port, while 50 parts by mass of the glass fibers (D-1) based on the component (A) were supplied from the downstream feed port. The mixture was melt-kneaded to produce pellets of a polyamide resin composition.

The obtained polyamide resin composition was molded, and the molded piece was used to carry out various evaluations. These measurement results are shown in Table 10 below.

[Examples 56 and 57]

By use of the same approach as in Example 55, the component (B) and the component (C) were added, and pellets of a polyamide resin composition were produced according to the composition shown in Table 10. Then, the polyamide resin composition was molded, and the molded piece was used to carry out various evaluations. These measurement results are shown in Table 10 below.

[Examples 58 to 82 and 84 and Comparative Example 7]

According to the composition described in Tables 11 to 16, other conditions were set in the same way as in Example 46 to produce each polyamide resin composition, which was then molded. The molded piece was used to carry out various measurements.

These measurement results, etc., are shown in Tables 11 to 16 below.

[Example 83]

According to the composition described in Tables 16, other conditions were set in the same way as in Example 1 to produce each polyamide resin composition, which was then molded. The molded piece was used to carry out various measurements.

These measurement results, etc., are shown in Tables 16 below.

[Table 1]

| Component | Unit | Comparative Example 1 | Comparative Example 2 | Example 1 | Example 2 | Example 3 | Example 4 | Example 5 |
|---|---|---|---|---|---|---|---|---|
| A-1 | [parts by mass] | 100 | 100 | 100 | 100 | 100 | 100 | 100 |
| B-1 | [parts by mass] | 0.1 | 0.3 | 0.6 | 0.8 | 1 | 1.2 | 1.4 |
| C-2 | [parts by mass] | 0.5 | 0.5 | 0.5 | 0.5 | 0.5 | 0.5 | 0.5 |
| D-1 | [parts by mass] | 50 | 50 | 50 | 50 | 50 | 50 | 50 |
| | | | | | | | | |
| Heat aging resistance (strength half-life at 230°C) | [h] | 200 | 300 | 1050 | 1150 | 1200 | 1250 | 1300 |
| Initial tensile strength | [MPa] | 200 | 200 | 200 | 200 | 200 | 200 | 200 |
| Tensile strength at 120°C | [MPa] | 107 | 107 | 107 | 107 | 107 | 107 | 107 |
| Rate of tensile strength retention after water absorption | [%] | 45 | 45 | 45 | 45 | 45 | 44 | 43 |
| Alkalinity value of aluminic acid metal salt / Acid value of organic acid | | 0.18 | 0.53 | 1.07 | 1.43 | 1.78 | 2.14 | 2.50 |
| Number-average molecular weight (Mn) | | 28000 | 24000 | 22000 | 21000 | 20000 | 19000 | 18000 |
| Presence or absence of 27Al NMR peak at 0-70 [ppm] | | Present | Present | Present | Present | Present | Present | Present |
| pH from dipping in water | | 7 | 7 | 7 | 7 | 7 | 7 | 7 |

[Table 2]

| Component | Unit | Example 3 | Example 6 | Example 7 | Example 8 | Example 9 |
|---|---|---|---|---|---|---|
| A-1 | [parts by mass] | 100 | 100 | 100 | 100 | 100 |
| B-1 | [parts by mass] | 1 | 1 | 1 | 1 | 1 |
| C-2 | [parts by mass] | 0.5 | 0.15 | 0.2 | 0.35 | 1 |
| D-1 | [parts by mass] | 50 | 50 | 50 | 50 | 50 |
| | | | | | | |
| Heat aging resistance (strength half-life at 230°C) | [h] | 1200 | 1200 | 1200 | 1200 | 1200 |
| Initial tensile strength | [MPa] | 200 | 200 | 200 | 200 | 190 |
| Tensile strength at 120°C | [MPa] | 107 | 107 | 107 | 107 | 107 |
| Rate of tensile strength retention after water absorption | [%] | 45 | 32 | 39 | 42 | 46 |
| Alkalinity value of aluminic acid metal salt / Acid value of organic acid | | 1.78 | 5.94 | 4.46 | 2.55 | 0.89 |
| Number-average molecular weight (Mn) | | 20000 | 20000 | 20000 | 20000 | 20000 |
| Presence or absence of 27Al NMR peak at 0-70 [ppm] | | Present | Present | Present | Present | Present |
| pH from dipping in water | | 7 | 7 | 7 | 7 | 7 |

[Table 3]

| Component | Unit | Example 3 | Example 10 | Example 11 | Example 12 | Example 13 | Example 14 |
|---|---|---|---|---|---|---|---|
| A-1 | [parts by mass] | 100 | 100 | 100 | 100 | 100 | 100 |
| B-1 | [parts by mass] | 1 | 1 | 1 | 1 | 1 | 1 |
| C-1 | [parts by mass] | | | | 0.33 | | |
| C-2 | [parts by mass] | 0.5 | 0.5 | 0.5 | | | |
| C-3 | [parts by mass] | | | | | 0.5 | |
| C-4 | [parts by mass] | | | | | | 0.29 |

(continued)

| Component | Unit | Example 3 | Example 10 | Example 11 | Example 12 | Example 13 | Example 14 |
|---|---|---|---|---|---|---|---|
| D-1 | [parts by mass] | 50 | | | 50 | 50 | 50 |
| D-2 | [parts by mass] | | | 50 | | | |
| | | | | | | | |
| Heat aging resistance (strength half-life at 230°C) | [h] | 1200 | 900 | 1200 | 1300 | 1300 | 1300 |
| Initial tensile strength | [MPa] | 200 | 100 | 200 | 200 | 200 | 200 |
| Tensile strength at 120°C | [MPa] | 107 | - | 107 | 107 | 107 | 107 |
| Rate of tensile strength retention after water absorption | [%] | 45 | 45 | 45 | 39 | 42 | 39 |
| Notched Charpy impact strength | [kJ/m2] | 14 | 14 | 11 | 14 | 14 | 14 |
| Alkalinity value of aluminic acid metal salt / Acid value of organic acid | | 1.78 | 1.78 | 1.78 | 1.78 | 1.78 | 1.78 |
| Number-average molecular weight (Mn) | | 20000 | 20000 | 20000 | 20000 | 20000 | 20000 |
| Presence or absence of 27Al NMR peak at 0-70 [ppm] | | Present | Present | Present | Present | Present | Present |
| pH from dipping in water | | 7 | 7 | 7 | 7 | 7 | 7 |

[Table 4]

| Component | Unit | Example 3 | Example 15 | Example 16 | Example 17 | Example 19 | Example 20 | Example 21 |
|---|---|---|---|---|---|---|---|---|
| A-1 | [parts by mass] | 100 | | | | | | 80 |
| A-2 | [parts by mass] | | 100 | | | | | |
| A-3 | [parts by mass] | | | 100 | | | | |
| A-4 | [parts by mass] | | | | 100 | | | |
| A-5 | [parts by mass] | | | | | | 100 | |

(continued)

| Component | Unit | Example 3 | Example 15 | Example 16 | Example 17 | Example 19 | Example 20 | Example 21 |
|---|---|---|---|---|---|---|---|---|
| A-6 | [parts by mass] | | | | | | 100 | |
| A-7 | [parts by mass] | | | | | | | 20 |
| B-1 | [parts by mass] | 1 | 1 | 1 | 1 | 1 | 1 | 1 |
| C-2 | [parts by mass] | 0.5 | 0.5 | 0.5 | 0.5 | 0.5 | 0.5 | 0.5 |
| D-1 | [parts by mass] | 50 | 50 | 50 | 50 | 50 | 50 | 50 |
| | | | | | | | | |
| Heat aging resistance (strength half-life at 230°C) | [h] | 1200 | 1200 | 1200 | 1200 | 1200 | 1200 | 1400 |
| Rate of tensile strength retention after water absorption | [%] | 45 | 45 | 45 | 45 | 45 | 45 | 45 |
| Alkalinity value of aluminic acid metal salt / Acid value of organic acid | | 1.78 | 1.78 | 1.78 | 1.78 | 1.78 | 1.78 | 1.78 |
| Number-average molecular weight (Mn) | | 20000 | 20000 | 20000 | 15000 | 12000 | 20000 | 20000 |
| Presence or absence of 27Al NMR peak at 0-70 [ppm] | | Present | Present | Present | Present | Present | Present | Present |
| pH from dipping in water | | 7 | 7 | 7 | 7 | 7 | 7 | 7 |

[Table 5]

| Component | Unit | Example 3 | Comparative Example 3 | Comparative Example 4 | Comparative Example 5 | Example 22 | Example 23 |
|---|---|---|---|---|---|---|---|
| A-1 | [parts by mass] | 100 | 100 | 100 | 100 | 100 | 100 |
| B-1 | [parts by mass] | 1 | 1 | | | 1 | 1 |
| C-2 | [parts by mass] | 0.5 | | 0.5 | | 0.5 | 0.5 |
| D-1 | [parts by mass] | 50 | 50 | 50 | 50 | 50 | 50 |
| Concentration of sodium hypophosphite in terms of elemental phosphorus | [mmol/kg] | 0 | 0 | 0 | 0 | 1.20 | 0.50 |
| | | | | | | | |
| Heat aging resistance (strength half-life at 230°C) | [h] | 1200 | 1200 | 100 | 100 | 1100 | 1120 |
| Rate of tensile strength retention after water absorption | [%] | 45 | 20 | 48 | 50 | 45 | 45 |
| Alkalinity value of aluminic acid metal salt / Acid value of organic acid | | 1.78 | - | - | - | 1.78 | 1.78 |
| Number-average molecular weight (Mn) | | 20000 | 20000 | 30000 | 30000 | 20000 | 20000 |
| Presence or absence of 27Al NMR peak at 0-70 [ppm] | | Present | Absent | Absent | Absent | Present | Present |
| pH from dipping in water | | 7 | 11 | 7 | 7 | 7 | 7 |

EP 3 109 282 A1

[Table 6]

| Component | Unit | Example 24 | Example 25 | Example 26 | Example 27 | Example 28 | Example 29 | Example 30 |
|---|---|---|---|---|---|---|---|---|
| A-1 | [parts by mass] | 100 | 100 | 100 | 100 | 100 | 100 | 100 |
| B-1 | [parts by mass] | 0.1 | 0.3 | 0.6 | 0.8 | 1 | 1.2 | 1.4 |
| C-11 | [parts by mass] | 0.15 | 0.15 | 0.15 | 0.15 | 0.15 | 0.15 | 0.15 |
| D-1 | [parts by mass] | 50 | 50 | 50 | 50 | 50 | 50 | 50 |
| | | | | | | | | |
| Heat aging resistance (strength half-life at 230°C) | [h] | 300 | 600 | 1050 | 1150 | 1200 | 1250 | 1300 |
| Initial tensile strength | [MPa] | 200 | 200 | 200 | 200 | 200 | 200 | 200 |
| Tensile strength at 120°C | [MPa] | 115 | 115 | 115 | 115 | 115 | 115 | 115 |
| Rate of tensile strength retention after water absorption | [%] | 45 | 45 | 45 | 45 | 45 | 44 | 42 |
| Presence or absence of branched structure with one or more branch points in molecule having molecular weight of 100,000 or higher | | Present | Present | Present | Present | Present | Present | Present |
| Presence or absence of carboxylic anhydride functional group in molecule having molecular weight of 100,000 or higher | | Present | Present | Present | Present | Present | Present | Present |
| Weight-average molecular weight/number-average molecular weight (Mw/Mn) | | 3.6 | 3.5 | 3.4 | 3.3 | 3.3 | 3.3 | 3.3 |
| Mw/Mn after aging at 120°C for 1000 h | | 3.9 | 3.7 | 3.5 | 3.3 | 3.3 | 3.3 | 3.3 |
| Number-average molecular weight (Mn) | | 25000 | 25000 | 25000 | 25000 | 25000 | 25000 | 25000 |
| Presence or absence of 27Al NMR peak at 0-70 [ppm] | | Present | Present | Present | Present | Present | Present | Present |
| pH from dipping in water | | 7 | 7 | 7 | 7 | 7 | 7 | 7 |

[Table 7]

| Component | Unit | Example 28 | Example 31 | Example 32 | Example 33 | Example 34 | Example 35 | Example 36 |
|---|---|---|---|---|---|---|---|---|
| A-1 | [parts by mass] | 100 | 100 | 100 | 100 | 100 | 100 | 100 |
| B-1 | [parts by mass] | 1 | 1 | 1 | 1 | 1 | 1 | 1 |
| C-11 | [parts by mass] | 0.15 | 0.05 | 0.1 | 0.2 | 0.3 | 0.45 | 0.15 |
| D-1 | [parts by mass] | 50 | 50 | 50 | 50 | 50 | 50 | |
| D-2 | [parts by mass] | | | | | | | 50 |
| Heat aging resistance (strength half-life at 230°C) | [h] | 1200 | 1200 | 1200 | 1150 | 1100 | 1050 | 1200 |
| Initial tensile strength | [MPa] | 200 | 200 | 200 | 200 | 200 | 190 | 200 |
| Rate of tensile strength retention after water absorption | [%] | 45 | 38 | 42 | 45 | 45 | 45 | 45 |
| Notched Charpy impact strength | [kJ/m2] | 14 | 14 | 14 | 14 | 14 | 14 | 11 |
| Presence or absence of branched structure with one or more branch points in molecule having molecular weight of 100,000 or higher | | Present | Present | Present | Present | Present | Present | Present |
| Presence or absence of carboxylic anhydride functional group in molecule having molecular weight of 100,000 or higher | | Present | Present | Present | Present | Present | Present | Present |
| Weight-average molecular weight/number-average molecular weight (Mw/Mn) | | 3.3 | 3.1 | 3.2 | 3.3 | 3.5 | 3.6 | 3.3 |
| Mw/Mn after aging at 120°C for 1000 h | | 3.3 | 3.1 | 3.2 | 3.3 | 3.5 | 3.6 | 3.3 |
| Number-average molecular weight (Mn) | | 25000 | 21000 | 23000 | 26000 | 28000 | 32000 | 25000 |

(continued)

| Component | Unit | Example 28 | Example 31 | Example 32 | Example 33 | Example 34 | Example 35 | Example 36 |
|---|---|---|---|---|---|---|---|---|
| Presence or absence of 27Al NMR peak at 0-70 [ppm] | | Present | Present | Present | Present | Present | Present | Present |
| pH from dipping in water | | 7 | 8 | 7 | 7 | 7 | 7 | 7 |

[Table 8]

| Component | Unit | Example 28 | Example 37 | Example 38 | Example 39 |
|---|---|---|---|---|---|
| A-1 | [parts by mass] | 100 | 100 | 100 | 100 |
| B-1 | [parts by mass] | 1 | 1 | 1 | 1 |
| C-11 | [parts by mass] | 0.15 | | | |
| C-12 | [parts by mass] | | 0.15 | | |
| C-13 | [parts by mass] | | | 0.15 | |
| C-14 | [parts by mass] | | | | 0.15 |
| D-1 | [parts by mass] | 50 | 50 | 50 | 50 |
| | | | | | |
| Heat aging resistance (strength half-life at 230°C) | [h] | 1200 | 1300 | 1300 | 1300 |
| Tensile strength at 120°C | [MPa] | 115 | 114 | 111 | 109 |
| Rate of tensile strength retention after water absorption | [%] | 45 | 44 | 42 | 39 |
| Presence or absence of branched structure with one or more branch points in molecule having molecular weight of 100,000 or higher | | Present | Present | Present | Present |
| Presence or absence of carboxylic anhydride functional group in molecule having molecular weight of 100,000 or higher | | Present | Present | Present | Present |
| Weight-average molecular weight/number-average molecular weight (Mw/Mn) | | 3.3 | 3.3 | 3.2 | 3.1 |
| Mw/Mn after aging at 120°C for 1000 h | | 3.3 | 3.3 | 3.2 | 3.1 |
| Number-average molecular weight (Mn) | | 25000 | 25000 | 25000 | 25000 |
| Presence or absence of 27Al NMR peak at 0-70 [ppm] | | Present | Present | Present | Present |
| pH from dipping in water | | 7 | 7 | 7 | 7 |

[Table 9]

| Component | Unit | Example 28 | Example 40 | Example 41 | Example 42 | Example 43 | Comparative Example 6 | Example 44 | Example 45 |
|---|---|---|---|---|---|---|---|---|---|
| A-1 | [parts by mass] | 100 | | | | | 100 | 100 | 100 |
| A-2 | [parts by mass] | | 100 | | | | | | |
| A-3 | [parts by mass] | | | 100 | | | | | |
| A-4 | [parts by mass] | | | | 100 | | | | |
| A-5 | [parts by mass] | | | | | 100 | | | |
| B-1 | [parts by mass] | 1 | 1 | 1 | 1 | 1 | | 1 | 1 |
| C-11 | [parts by mass] | 0.15 | 0.15 | 0.15 | 0.15 | 0.15 | | 0.15 | 0.15 |
| D-1 | [parts by mass] | 50 | 50 | 50 | 50 | 50 | 50 | 50 | 50 |
| Concentration of sodium hypophosphite in terms of elemental phosphorus [mmol/kg] | | | | | | | | 1.20 | 0.50 |
| | | | | | | | | | |
| Heat aging resistance (strength half-life at 230°C) | [h] | 1200 | 1200 | 1200 | 1200 | 1200 | 100 | 1100 | 1120 |
| Rate of tensile strength retention after water absorption | [%] | 45 | 45 | 45 | 45 | 45 | 50 | 45 | 45 |

EP 3 109 282 A1

(continued)

| Component | Unit | Example 28 | Example 40 | Example 41 | Example 42 | Example 43 | Comparative Example 6 | Example 44 | Example 45 |
|---|---|---|---|---|---|---|---|---|---|
| Presence or absence of branched structure with one or more branch points in molecule having molecular weight of 100,000 or higher | | Present | Present | Present | Present | Present | Absent | Present | Present |
| Presence or absence of carboxylic anhydride functional group in molecule having molecular weight of 100,000 or higher | | Present | Present | Present | Present | Present | Absent | Present | Present |
| Weight-average molecular weight/number-average molecular weight (Mw/Mn) | | 3.3 | 3.3 | 3.3 | 3.3 | 3.3 | 2.1 | 3.3 | 3.3 |
| Mw/Mn after aging at 120°C for 1000 h | | 3.3 | 3.3 | 3.3 | 3.3 | 3.3 | 2.3 | 3.3 | 3.3 |
| Number-average molecular weight (Mn) | | 25000 | 25000 | 25000 | 25000 | 25000 | 20000 | 25000 | 25000 |
| Presence or absence of 27Al NMR peak at 0-70 [ppm] | | Present | Present | Present | Present | Present | Absent | Present | Present |
| pH from dipping in water | | 7 | 7 | 7 | 7 | 7 | 7 | 7 | 7 |

[Table 10]

| Component | Unit | Example 46 | Example 47 | Example 48 | Example 49 | Example 50 | Example 51 | Example 52 | Example 53 | Example 54 | Example 55 | Example 56 | Example 57 |
|---|---|---|---|---|---|---|---|---|---|---|---|---|---|
| A-1 | [parts by mass] | 100 | 100 | 100 | 100 | 100 | 100 | 100 | 100 | 100 | 100 | 100 | 100 |
| B-1 | [parts by mass] | 1 | 1 | 1 | 1 | 1 | 1 | 1 | 1 | 1 | 1 | 1 | 1 |
| C-5 | [parts by mass] | 1 | | | 1 | | | 1 | | | 1 | | |
| C-1 | [parts by mass] | | 1 | | | 1 | | | 1 | | | 1 | |
| C-7 | [parts by mass] | | | | | | 1 | | | 1 | | | 1 |
| C-10 | [parts by mass] | | | 1 | | | | | | | | | |
| D-1 | [parts by mass] | 50 | 50 | 50 | 50 | 50 | 50 | 50 | 50 | 50 | 50 | 50 | 50 |
| Number-average molecular weight (Mn) | | 20000 | 20000 | 20000 | 8000 | 8000 | 8000 | 6000 | 6000 | 6000 | 8000 | 8000 | 8000 |
| Heat aging resistance (strength half-life at 230°C) | [h] | 1500 | 1500 | 1400 | 600 | 600 | 600 | 600 | 600 | 600 | 700 | 700 | 700 |
| Initial tensile strength | [MPa] | 200 | 200 | 200 | 180 | 180 | 180 | 170 | 170 | 170 | 175 | 175 | 175 |

(continued)

| Component | Unit | Example 46 | Example 47 | Example 48 | Example 49 | Example 50 | Example 51 | Example 52 | Example 53 | Example 54 | Example 55 | Example 56 | Example 57 |
|---|---|---|---|---|---|---|---|---|---|---|---|---|---|
| Rate of tensile strength retention after water absorption | [%] | 50 | 40 | 40 | 20 | 20 | 20 | 50 | 45 | 37 | 30 | 20 | 20 |
| Presence or absence of 27Al NMR peak at 0-70 [ppm] | | Present | Present | Present | Present | Present | Present | Present | Present | Present | Present | Present | Present |
| pH from dipping in water | | 7 | 7 | 7 | 7 | 7 | 7 | 7 | 7 | 7 | 7 | 7 | 7 |

[Table 11]

| Component | Unit | Example 46 | Example 58 | Example 59 | Example 60 | Comparative Example 7 |
|---|---|---|---|---|---|---|
| A-1 | [parts by mass] | 100 | 100 | 100 | 100 | 100 |
| B-1 | [parts by mass] | 1 | 1 | 1 | 1 | 1 |
| C-1 | [parts by mass] | | | | 1 | |
| C-5 | [parts by mass] | 1 | 0,8 | 0.5 | | |
| D-1 | [parts by mass] | 50 | 50 | 50 | 50 | 50 |
| | | | | | | |
| Heat aging resistance (strength half-life at 230°C) | [h] | 1500 | 1530 | 1540 | 1400 | 1500 |
| Initial tensile strength | [MPa] | 200 | 200 | 200 | 200 | 200 |
| Rate of tensile strength retention after water absorption | [%] | 45 | 43 | 40 | 45 | 20 |
| Presence or absence of 27Al NMR peak at 0-70 [ppm] | | Present | Present | Present | Present | Absent |
| pH from dipping in water | | 7 | 7 | 7 | 7 | 11 |
| Number-average molecular weight (Mn) | | 20000 | 20000 | 20000 | 20000 | 20000 |

[Table 12]

| Component | Unit | Example 46 | Example 58 | Example 59 | Example 61 | Example 62 | Example 60 | Example 63 | Example 64 | Example 65 | Example 66 |
|---|---|---|---|---|---|---|---|---|---|---|---|
| A-1 | [parts by mass] | 100 | 100 | 100 | | | 100 | 100 | 100 | | |
| A-2 | [parts by mass] | | | | 100 | | | | | 100 | |
| A-3 | [parts by mass] | | | | | 100 | | | | | 100 |
| B-1 | [parts by mass] | 1 | 1 | 1 | 1 | 1 | 1 | 1 | 1 | 1 | 1 |
| C-5 | [parts by mass] | 1 | 0.8 | 0.5 | 0.8 | 0.8 | | | | 0.8 | 0.8 |
| C-1 | [parts by mass] | | | | | | 1 | 0.8 | 0.5 | | |
| D-1 | [parts by mass] | 50 | 50 | 50 | 50 | 50 | 50 | 50 | 50 | 50 | 50 |
| | | | | | | | | | | | |
| Alkalinity value of aluminic acid metal salt / Acid value of organic acid | | 2.0 | 2.5 | 4.1 | 2.5 | 2.5 | 2.3 | 2.9 | 4.7 | 2.9 | 2.9 |
| Alkalinity value of aluminic acid metal salt/(Acid value of organic acid + Acid value of carboxyl group terminus) | | 1.0 | 1.1 | 1.4 | 1.6 | 0.9 | 1.1 | 1.2 | 1.4 | 1.6 | 0.8 |
| Heat aging resistance (strength half-life at 230°C) | [h] | 1500 | 1530 | 1540 | 1530 | 1530 | 1400 | 1450 | 1480 | 1530 | 1530 |

EP 3 109 282 A1

| Component | Unit | Example 46 | Example 58 | Example 59 | Example 61 | Example 62 | Example 60 | Example 63 | Example 64 | Example 65 | Example 66 |
|---|---|---|---|---|---|---|---|---|---|---|---|
| Initial tensile strength | [MPa] | 200 | 200 | 200 | 200 | 200 | 200 | 200 | 200 | 200 | 200 |
| Rate of tensile strength retention after water absorption | [%] | 45 | 43 | 40 | 43 | 44 | 45 | 45 | 45 | 40 | 45 |
| Number-average molecular weight (Mn) | | 20000 | 20000 | 20000 | 20000 | 20000 | 20000 | 20000 | 20000 | 20000 | 20000 |
| Presence or absence of 27Al NMR peak at 0-70 [ppm] | | Present | Present | Present | Present | Present | Present | Present | Present | Present | Present |
| pH from dipping in water | | 7 | 7 | 7 | 7 | 7 | 7 | 7 | 7 | 7 | 7 |

[Table 13]

| Component | Unit | Example 46 | Example 58 | Example 59 | Example 67 | Example 68 | Example 69 | Example 70 | Example 71 | Example 72 | Example 73 | Example 74 |
|---|---|---|---|---|---|---|---|---|---|---|---|---|
| A-1 | [parts by mass] | 100 | 100 | 100 | 100 | 100 | 100 | 100 | 100 | 100 | 100 | 100 |
| B-1 | [parts by mass] | 1 | 1 | 1 | 1 | 1 | 1 | 1 | 1 | 1 | 1 | 1 |
| C-5 | [parts by mass] | 1 | 0.8 | 0.5 | | | | | | | | |
| C-6 | [parts by mass] | | | | 1 | 0.8 | 0.5 | | | | | |
| C-8 | [parts by mass] | | | | | | | 1 | 0.8 | 0.5 | | |
| C-9 | [parts by mass] | | | | | | | | | | 2 | 1 |
| D-1 | [parts by mass] | 50 | 50 | 50 | 50 | 50 | 50 | 50 | 50 | 50 | 50 | 50 |
| | | | | | | | | | | | | |
| Heat aging resistance (strength half-life at 230°C) | [h] | 1500 | 1530 | 1540 | 1500 | 1530 | 1540 | 1500 | 1530 | 1540 | 1450 | 1460 |
| Initial tensile strength | [MPa] | 200 | 200 | 200 | 200 | 200 | 200 | 190 | 195 | 195 | 200 | 200 |
| Rate of tensile strength retention after water absorption | [%] | 45 | 43 | 40 | 45 | 43 | 40 | 45 | 43 | 41 | 45 | 39 |

EP 3 109 282 A1

(continued)

| Component | Unit | Example 46 | Example 58 | Example 59 | Example 67 | Example 68 | Example 69 | Example 70 | Example 71 | Example 72 | Example 73 | Example 74 |
|---|---|---|---|---|---|---|---|---|---|---|---|---|
| Amount of decrease in mass at 300°C for 1 h | [%] | 8 | 6 | 4 | 8 | 6 | 4 | 8 | 6 | 4 | 13 | 11 |
| Number-average molecular weight (Mn) | | 20000 | 20000 | 20000 | 20000 | 20000 | 20000 | 20000 | 20000 | 20000 | 20000 | 20000 |
| Presence or absence of 27Al NMR peak at 0-70 [ppm] | | Present | Present | Present | Present | Present | Present | Present | Present | Present | Present | Present |
| pH from dipping in water | | 7 | 7 | 7 | 7 | 7 | 7 | 7 | 7 | 7 | 7 | 7 |

[Table 14]

| Component | Unit | Example 75 | Example 76 | Comparative Example 7 |
|---|---|---|---|---|
| A-1 | [parts by mass] | 100 | 100 | 100 |
| B-1 | [parts by mass] | 1 | 1 | 1 |
| C-11 | [parts by mass] | 0.4 | | |
| C-12 | [parts by mass] | | 0.4 | |
| D-1 | [parts by mass] | 50 | 50 | 50 |
| | | | | |
| Weight-average molecular weight/number-average molecular weight (Mw/Mn) | | 3.5 | 3.5 | 1.8 |
| Mw/Mn after aging at 120°C for 1000 h | | 3.5 | 3.5 | 2.8 |
| Heat aging resistance (strength half-life at 230°C) | [h] | 1400 | 1400 | 1500 |
| Initial tensile strength | [MPa] | 200 | 200 | 200 |
| Rate of tensile strength retention after water absorption | [%] | 45 | 45 | 20 |
| Number-average molecular weight (Mn) | | 30000 | 30000 | 20000 |
| Presence or absence of 27Al NMR peak at 0-70 [ppm] | | Present | Present | Present |
| pH from dipping in water | | 7 | 7 | 11 |

[Table 15]

| Component | Unit | Example 46 | Example 77 | Example 78 | Example 79 | Example 80 | Example 81 | Example 82 |
|---|---|---|---|---|---|---|---|---|
| A-1 | [parts by mass] | 100 | | | | | | 80 |
| A-2 | [parts by mass] | | 100 | | | | | |
| A-3 | [parts by mass] | | | 100 | | | | |
| A-4 | [parts by mass] | | | | 100 | | | |

(continued)

| Component | Unit | Example 46 | Example 77 | Example 78 | Example 79 | Example 80 | Example 81 | Example 82 |
|---|---|---|---|---|---|---|---|---|
| A-5 | [parts by mass] | | | | | 100 | | |
| A-6 | [parts by mass] | | | | | | 100 | |
| A-7 | [parts by mass] | | | | | | | 20 |
| B-1 | [parts by mass] | 1 | 1 | 1 | 1 | 1 | 1 | 1 |
| C-5 | [parts by mass] | 1 | 1 | 1 | 1 | 1 | 1 | 1 |
| D-1 | [parts by mass] | 50 | 50 | 50 | 50 | 50 | 50 | 50 |
| | | | | | | | | |
| Heat aging resistance (strength half-life at 230°C) | [h] | 1500 | 1500 | 1500 | 1500 | 1500 | 1500 | 1600 |
| Rate of tensile strength retention after water absorption | [%] | 45 | 45 | 45 | 45 | 45 | 45 | 45 |
| Number-average molecular weight (Mn) | | 20000 | 20000 | 20000 | 15000 | 12000 | 20000 | 20000 |
| Presence or absence of 27Al NMR peak at 0-70 [ppm] | | Present | Present | Present | Present | Present | Present | Present |
| pH from dipping in water | | 7 | 7 | 7 | 7 | 7 | 7 | 7 |

[Table 16]

| Component | Unit | Example 83 | Example 82 | Example 84 | Example 46 |
|---|---|---|---|---|---|
| A-1 | [parts by mass] | 100 | 80 | 80 | 100 |
| A-7 | [parts by mass] | | 20 | | |

(continued)

| Component | Unit | Example 83 | Example 82 | Example 84 | Example 46 |
|---|---|---|---|---|---|
| A-8 | [parts by mass] | | | 20 | |
| B-1 | [parts by mass] | 1 | 1 | 1 | 1 |
| C-5 | [parts by mass] | 1 | 1 | 1 | 1 |
| D-1 | [parts by mass] | 50 | 50 | 50 | 50 |
| | | | | | |
| Heat aging resistance (strength half-life at 230°C) | [h] | 1000 | 1600 | 1600 | 1500 |
| Number-average molecular weight (Mn) | | 20000 | 20000 | 20000 | 20000 |
| Rate of tensile strength retention after water absorption | [%] | 45 | 45 | 45 | 45 |
| Presence or absence of 27Al NMR peak at 0-70 [ppm] | | Present | Present | Present | Present |
| pH from dipping in water | | 7 | 7 | 7 | 7 |

These tables demonstrated that the polyamide resin compositions of Examples of the present invention exhibit excellent heat aging resistance and mechanical physical properties during water absorption.

The present application is based on Japanese Patent Application No. 2014-032235 filed on Feb. 21, 2014 with the Japan Patent Office, and Japanese Patent Application No. 2014-062739 filed on Mar. 25, 2014 to the Japanese Patent Office, the contents of which are incorporated herein by reference in their entirety.

Industrial Applicability

The polyamide resin composition of the present invention is industrially applicable as materials for various parts, for example, for automobiles, for machinery industry, for electric or electronic uses, for industrial materials, for engineering materials, and for daily necessities or domestic articles.

**Claims**

1. A polyamide resin composition comprising

   (A) a polyamide resin,
   (B) an aluminic acid metal salt, and
   (C) an organic acid, wherein

   a content of the aluminic acid metal salt (B) is larger than 0.6 parts by mass based on 100 parts by mass of the polyamide resin (A).

2. The polyamide resin composition according to claim 1, wherein having a number-average molecular weight (Mn) of 10,000 or higher.

3. The polyamide resin composition according to claim 1 or 2, wherein the polyamide resin composition has a moisture content of 1000 ppm or lower and has a peak at 0 ppm to 70 ppm in solid 27A1-NMR measurement.

4.  The polyamide resin composition according to any one of claims 1 to 3, wherein a water obtained by being impregnated in 2 g of the polyamide resin composition into 50 mL of distilled water and left for 24 hours under a condition of 80°C has pH of 8 or lower.

5.  The polyamide resin composition according to any one of claims 1 to 4, wherein the content of the aluminic acid metal salt (B) is larger than 0.8 parts by mass based on 100 parts by mass of the polyamide resin (A).

6.  The polyamide resin composition according to any one of claims 1 to 5, wherein the content of the aluminic acid metal salt (B) is larger than 1.1 parts by mass based on 100 parts by mass of the polyamide resin (A).

7.  The polyamide resin composition according to any one of claims 1 to 6, wherein an alkalinity value of the aluminic acid metal salt (B) contained in 100 parts by mass of the polyamide resin (A) and an acid value of the organic acid (C) contained in 100 parts by mass of the polyamide resin (A) satisfy the following condition (formula 1) :

$$0 < X \leq 5 \ ... \ (\text{formula 1})$$

(X = the alkalinity value of the aluminic acid metal salt (B) contained in 100 parts by mass of the polyamide / the acid value of the organic acid (C) contained in 100 parts by mass of the polyamide).

8.  The polyamide resin composition according to any one of claims 1 to 7, wherein the alkalinity value of the aluminic acid metal salt (B) contained in 100 parts by mass of the polyamide resin (A) and a sum of the acid value of the organic acid (C) contained in 100 parts by mass of the polyamide resin (A) and an acid value of a carboxyl group terminus of the polyamide resin (A) satisfy the following condition (formula 2):

$$0 < Y \leq 3 \ ... \ (\text{formula 2})$$

(Y = the alkalinity value of the aluminic acid metal salt (B) contained in 100 parts by mass of the polyamide / (the acid value of the organic acid (C) contained in 100 parts by mass of the polyamide + the acid value of the carboxyl group terminus of the polyamide resin (A))).

9.  The polyamide resin composition according to any one of claims 1 to 8, wherein the organic acid (C) has a molecular weight (Mn) of $50 \leq Mn \leq 1000$.

10.  The polyamide resin composition according to any one of claims 1 to 9, wherein the organic acid (C) has a carboxyl group.

11.  The polyamide resin composition according to any one of claims 1 to 10, wherein the organic acid (C) is an aromatic carboxylic acid.

12.  The polyamide resin composition according to any one of claims 1 to 8, wherein having

a weight-average molecular weight/number-average molecular weight (Mw/Mn) of 2.0 or higher, and Mw/Mn of 3.0 or higher after heat aging at 120°C for 1000 hours.

13. The polyamide resin composition according to any one of claims 1 to 8 and 12, wherein in analysis based on a GPC-MALS-VISCO method,
a molecule having a molecular weight of 100,000 or higher has a branched structure with one or more branch points, and the molecule having a molecular weight of 100,000 or higher has a carboxylic anhydride functional group.

14. The polyamide resin composition according to any one of claims 1 to 8, 12, and 13, wherein
the organic acid (C) comprises a carboxylic anhydride group-containing unsaturated vinyl monomer as a component constituting the backbone, and
the organic acid (C) has a glass transition temperature of 0°C < Tg.

15. The polyamide resin composition according to claim 14, wherein the organic acid (C) is a copolymer of an olefin and maleic anhydride.

16. The polyamide resin composition according to claim 14 or 15, wherein the organic acid (C) is a copolymer of ethylene and maleic anhydride.

17. The polyamide resin composition according to any one of claims 1 to 16, wherein the aluminic acid metal salt (B) has been added to the polyamide resin (A) by melt kneading.

18. The polyamide resin composition according to any one of claims 1 to 17, wherein the organic acid (C) has been added to the polyamide resin (A) by melt kneading.

19. The polyamide resin composition according to any one of claims 1 to 18, wherein the aluminic acid metal salt (B) is sodium aluminate.

20. The polyamide resin composition according to any one of claims 1 to 19, further comprising (D) an inorganic filler except for the aluminic acid metal salt.

21. The polyamide resin composition according to claim 20, wherein the inorganic filler (D) except for the aluminic acid metal salt is glass fibers.

22. The polyamide resin composition according to claim 20 or 21, wherein the inorganic filler (D) except for the aluminic acid metal salt is glass fibers and comprises a carboxylic anhydride group-containing unsaturated vinyl monomer as a portion of a component that is applied to the surface of the glass fibers.

23. The polyamide resin composition according to any one of claims 1 to 22, wherein an amount of decrease in mass is 10% or less when the polyamide resin composition is left at 300°C for 1 hour in an inert gas atmosphere.

24. A method for producing the polyamide resin composition according to any one of claims 1 to 23, comprising a step of adding an aluminic acid metal salt (B) to a polyamide resin (A) by melt kneading.

25. The method for producing a polyamide resin composition according to claim 24, wherein the method comprises a step of adding an organic acid (C) to the polyamide resin (A) by melt kneading.

26. The method for producing a polyamide resin composition according to claim 24 or 25, wherein the method comprises a step of adding the aluminic acid metal salt (B) in a masterbatch form.

27. The method for producing a polyamide resin composition according to any one of claims 24 to 26, wherein the method comprises a step of adding the organic acid (C) in a masterbatch form.

28. A molded product comprising the polyamide resin composition according to any one of claims 1 to 23.

29. Use of a polyamide resin composition comprising (A) a polyamide resin, (B) an aluminic acid metal salt, and (C) an organic acid for producing a molded product excellent in heat aging resistance and physical properties during water absorption.

**Amended claims under Art. 19.1 PCT**

**1.** A polyamide resin composition comprising

(A) a polyamide resin,
(B) an aluminic acid metal salt, and
(C) an organic acid, wherein

a content of the aluminic acid metal salt (B) is larger than 0.6 parts by mass based on 100 parts by mass of the polyamide resin (A).

**2.** (Amended) The polyamide resin composition according to claim 1, wherein the polyamide resin composition has a number-average molecular weight (Mn) of 10,000 or higher.

**3.** The polyamide resin composition according to claim 1 or 2, wherein the polyamide resin composition has a moisture content of 1000 ppm or lower and has a peak at 0 ppm to 70 ppm in solid 27Al-NMR measurement.

**4.** The polyamide resin composition according to any one of claims 1 to 3, wherein a water obtained by being impregnated in 2 g of the polyamide resin composition into 50 mL of distilled water and left for 24 hours under a condition of 80°C has pH of 8 or lower.

**5.** The polyamide resin composition according to any one of claims 1 to 4, wherein the content of the aluminic acid metal salt (B) is larger than 0.8 parts by mass based on 100 parts by mass of the polyamide resin (A).

**6.** The polyamide resin composition according to any one of claims 1 to 5, wherein the content of the aluminic acid metal salt (B) is larger than 1.1 parts by mass based on 100 parts by mass of the polyamide resin (A).

**7.** (Amended) The polyamide resin composition according to any one of claims 1 to 6, wherein the alkalinity value of an aluminic acid metal salt (B) contained in the polyamide resin composition and an acid value of the organic acid (C) contained in the polyamide resin composition satisfy the following condition (formula 1):

$$0 < X \leq 5 \ldots \text{(formula 1)}$$

(X = the alkalinity value of the aluminic acid metal salt (B) contained in the polyamide resin composition / the acid value of the organic acid (C) contained in the

polyamide resin composition).

**8.** (Amended) The polyamide resin composition according to any one of claims 1 to 7, wherein the alkalinity value of the aluminic acid metal salt (B) contained in the polyamide resin composition and a sum of the acid value of the organic acid (C) contained in the polyamide resin composition and an acid value of a carboxyl group terminus of the polyamide resin (A) satisfy the following condition (formula 2):

$$0 < Y \leq 3 \ldots \text{(formula 2)}$$

(Y = the alkalinity value of the aluminic acid metal salt
(B) contained in the polyamide resin composition / (the
acid value of the organic acid (C) contained in the
polyamide resin composition + the acid value of the
carboxyl group terminus of the polyamide resin (A))).

9. The polyamide resin composition according to any one of claims 1 to 8, wherein the organic acid (C) has a molecular weight (Mn) of $50 \leq Mn \leq 1000$.

10. The polyamide resin composition according to any one of claims 1 to 9, wherein the organic acid (C) has a carboxyl group.

11. The polyamide resin composition according to any one of claims 1 to 10, wherein the organic acid (C) is an aromatic carboxylic acid.

12. (Amended) The polyamide resin composition according to any one of claims 1 to 8, wherein the polyamide resin composition has a weight-average molecular weight/number-average molecular weight (Mw/Mn) of 2.0 or higher, and Mw/Mn of 3.0 or higher after heat aging at 120°C for 1000 hours.

13. The polyamide resin composition according to any one of claims 1 to 8 and 12, wherein in analysis based on a GPC-MALS-VISCO method,
a molecule having a molecular weight of 100,000 or higher has a branched structure with one or more branch points, and the molecule having a molecular weight of 100,000 or higher has a carboxylic anhydride functional group.

14. The polyamide resin composition according to any one of claims 1 to 8, 12, and 13, wherein
the organic acid (C) comprises a carboxylic anhydride group-containing unsaturated vinyl monomer as a component constituting the backbone, and
the organic acid (C) has a glass transition temperature of 0°C < Tg.

15. The polyamide resin composition according to claim 14, wherein the organic acid (C) is a copolymer of an olefin and maleic anhydride.

16. The polyamide resin composition according to claim 14 or 15, wherein the organic acid (C) is a copolymer of ethylene and maleic anhydride.

17. The polyamide resin composition according to any one of claims 1 to 16, wherein the aluminic acid metal salt (B) has been added to the polyamide resin (A) by melt kneading.

18. The polyamide resin composition according to any one of claims 1 to 17, wherein the organic acid (C) has been added to the polyamide resin (A) by melt kneading.

19. The polyamide resin composition according to any one of claims 1 to 18, wherein the aluminic acid metal salt (B) is sodium aluminate.

20. The polyamide resin composition according to any one of claims 1 to 19, further comprising (D) an inorganic filler except for the aluminic acid metal salt.

21. The polyamide resin composition according to claim 20, wherein the inorganic filler (D) except for the aluminic acid metal salt is glass fibers.

22. The polyamide resin composition according to claim 20 or 21, wherein the inorganic filler (D) except for the aluminic acid metal salt is glass fibers and comprises a carboxylic anhydride group-containing unsaturated vinyl monomer as a portion of a component that is applied to the surface of the glass fibers.

**23.** The polyamide resin composition according to any one of claims 1 to 22, wherein an amount of decrease in mass is 10% or less when the polyamide resin composition is left at 300°C for 1 hour in an inert gas atmosphere.

**24.** A method for producing the polyamide resin composition according to any one of claims 1 to 23, comprising a step of
adding an aluminic acid metal salt (B) to a polyamide resin (A) by melt kneading.

**25.** The method for producing a polyamide resin composition according to claim 24, wherein the method comprises a step of adding an organic acid (C) to the polyamide resin (A) by melt kneading.

**26.** The method for producing a polyamide resin composition according to claim 24 or 25, wherein the method comprises a step of adding the aluminic acid metal salt (B) in a masterbatch form.

**27.** The method for producing a polyamide resin composition according to any one of claims 24 to 26, wherein the method comprises a step of adding the organic acid (C) in a masterbatch form.

**28.** A molded product comprising the polyamide resin composition according to any one of claims 1 to 23.

**29.** Use of a polyamide resin composition comprising (A) a polyamide resin, (B) an aluminic acid metal salt, and (C) an organic acid for producing a molded product excellent in heat aging resistance and physical properties during water absorption.

## INTERNATIONAL SEARCH REPORT

| | International application No. |
|---|---|
| | PCT/JP2015/054665 |

A.  CLASSIFICATION OF SUBJECT MATTER
*C08L77/00*(2006.01)i, *C08K3/00*(2006.01)i, *C08K3/24*(2006.01)i, *C08K3/32*
(2006.01)i, *C08K5/05*(2006.01)i, *C08K5/09*(2006.01)i, *C08K5/42*(2006.01)i,
*C08K9/04*(2006.01)i
According to International Patent Classification (IPC) or to both national classification and IPC

B.  FIELDS SEARCHED

Minimum documentation searched (classification system followed by classification symbols)
C08K3/00-C08K13/08, C08L1/00-C08L101/14

Documentation searched other than minimum documentation to the extent that such documents are included in the fields searched
Jitsuyo Shinan Koho         1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)
CAplus/REGISTRY(STN)

C.  DOCUMENTS CONSIDERED TO BE RELEVANT

| Category* | Citation of document, with indication, where appropriate, of the relevant passages | Relevant to claim No. |
|---|---|---|
| A | JP 2006-316244 A  (Asahi Kasei Chemicals Corp.), 24 November 2006 (24.11.2006), claims; paragraphs [0034] to [0036], [0051] to [0052], [0062] to [0074]; tables 1 to 3 & US 2009/0069471 A1    & WO 2006/112058 A1 & EP 1870436 A1 | 1-29 |
| A | JP 2005-187553 A  (Asahi Kasei Chemicals Corp.), 14 July 2005 (14.07.2005), entire text (Family: none) | 1-29 |
| A | JP 2007-023207 A  (Asahi Kasei Chemicals Corp.), 01 February 2007 (01.02.2007), entire text (Family: none) | 1-29 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 May 2015 (01.05.15) | 19 May 2015 (19.05.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

International application No.

PCT/JP2015/054665

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-043812 A  (Asahi Kasei Chemicals Corp.), 12 February 2004 (12.02.2004), entire text & US 2006/0142443 A1    & WO 2004/007614 A1 | 1-29 |
| A | JP 2007-246582 A  (Asahi Kasei Chemicals Corp.), 27 September 2007 (27.09.2007), entire text (Family: none) | 1-29 |
| A | US 4397979 A  (Allied Corp.), 09 August 1983 (09.08.1983), entire text (Family: none) | 1-29 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013501095 A
- JP 2013521393 A
- JP 2008527129 A
- JP 2006528260 A
- JP 2008527127 A
- JP 2005206662 A
- JP 2004091778 A
- JP S49116151 A
- JP 2008007563 A
- JP 2006316244 A

- JP 2005281616 A
- JP 2007246580 A
- JP 2007246581 A
- JP 2007246583 A
- JP 2006225593 A
- JP 2013040346 A
- JP 2011148997 A
- JP 2014032235 A
- JP 2014062739 A